# EUROPEAN PATENT APPLICATION

(11) **EP 4 779 663 A1**
(43) Date of publication of application: **22.07.2026**
(21) Application number: 24951862.2
(22) Date of filing: 22.08.2024
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: WATANABE, Yukie, Nagaokakyo-shi, Kyoto 617-8555 (JP)
(74) Representative: Stöckeler, Ferdinand
(86) International application number: PCT/JP2024/029753
(87) International publication number: WO 2026/042217

(57) **Abstract**

Provided is a multilayer ceramic capacitor capable of improving self-alignment properties during mounting.

A multilayer ceramic capacitor 10 according to the present invention is a multilayer ceramic capacitor including: a multilayer body having a first surface and a second surface that face each other in a lamination direction, a third surface and a fourth surface that face each other in a first direction orthogonal to the lamination direction, and a fifth surface and a sixth surface that face each other in a second direction orthogonal to the lamination direction and the first direction; a first outer electrode disposed on the third surface, the fifth surface, and the first surface; a second outer electrode disposed on the third surface, the sixth surface, and the first surface; a third outer electrode disposed on the fourth surface, the sixth surface, and the first surface; and a fourth outer electrode disposed on the fourth surface, the fifth surface, and the first surface. On the first surface, the first outer electrode includes a side A of the first outer electrode facing the fourth outer electrode and a side B of the first outer electrode facing the second outer electrode, the second outer electrode includes a side C of the second outer electrode facing the first outer electrode and a side D of the second outer electrode facing the third outer electrode, the third outer electrode includes a side E of the third outer electrode facing the second outer electrode and a side F of the third outer electrode facing the fourth outer electrode, and the fourth outer electrode includes a side G of the fourth outer electrode facing the third outer electrode and a side H of the fourth outer electrode facing the first outer electrode. The side B, the side C, the side F, and the side G are inclined in the same direction with respect to the first direction, and 0.85 ≤ L/W ≤ 1.0 is satisfied, where L is a dimension in the first direction and W is a dimension in the second direction.

## Description

### Technical Field

The present invention relates to a multilayer ceramic capacitor.

### Background Art

With the recent reduction in size and thickness of electronic devices such as mobile phones and portable music players, multilayer ceramic capacitors mounted in such smaller and thinner electronic devices have also become smaller and thinner (see Patent Document 1). In particular, multilayer ceramic capacitors that are becoming thinner are now being used by being embedded in wiring boards, or being mounted in a very narrow gap even when mounted on the surface of a wiring board.

### Citation List

### Patent Document

Patent Document 1: Japanese Unexamined Patent Application Publication No. 2021-101449

### Summary of Invention

### Technical Problem

As a multilayer ceramic capacitor that can be made thinner as described above, a multilayer ceramic capacitor described in Patent Document 1 is disclosed. As for the multilayer ceramic capacitor described in Patent Document 1 and the like, a method is known in which a region other than outer electrodes is masked and an underlying layer is formed as a sputtering film using a sputtering method. The multilayer ceramic capacitor described in Patent Document 1 and the like has a substantially tetragonal outer shape. Such a substantially tetragonal outer shape causes adjacent outer electrodes to be formed small, resulting in poor self-alignment properties of solder when the capacitor is mounted on a mounting board by soldering. This leads to poor mountability, which may cause misalignment between the multilayer ceramic capacitor and a land electrode on the mounting board during mounting.

Accordingly, it is a main object of the present invention to provide a multilayer ceramic capacitor capable of improving self-alignment properties during mounting. Solution to Problem

A multilayer ceramic capacitor according to this invention is a multilayer ceramic capacitor including: a multilayer body having a first surface and a second surface that face each other in a lamination direction, a third surface and a fourth surface that face each other in a first direction orthogonal to the lamination direction, and a fifth surface and a sixth surface that face each other in a second direction orthogonal to the lamination direction and the first direction; a first outer electrode disposed on the third surface, the fifth surface, and the first surface; a second outer electrode disposed on the third surface, the sixth surface, and the first surface; a third outer electrode disposed on the fourth surface, the sixth surface, and the first surface; and a fourth outer electrode disposed on the fourth surface, the fifth surface, and the first surface. On the first surface, the first outer electrode includes a side A of the first outer electrode facing the fourth outer electrode and a side B of the first outer electrode facing the second outer electrode, the second outer electrode includes a side C of the second outer electrode facing the first outer electrode and a side D of the second outer electrode facing the third outer electrode, the third outer electrode includes a side E of the third outer electrode facing the second outer electrode and a side F of the third outer electrode facing the fourth outer electrode, and the fourth outer electrode includes a side G of the fourth outer electrode facing the third outer electrode and a side H of the fourth outer electrode facing the first outer electrode. The side B, the side C, the side F, and the side G are inclined in the same direction with respect to the first direction, and 0.85 ≤ L/W ≤ 1.0 is satisfied, where L is a dimension in the first direction and W is a dimension in the second direction.

In the multilayer ceramic capacitor according to the present invention, the first outer electrode includes the side A of the first outer electrode facing the fourth outer electrode and the side B of the first outer electrode facing the second outer electrode, the second outer electrode includes the side C of the second outer electrode facing the first outer electrode and the side D of the second outer electrode facing the third outer electrode, the third outer electrode includes the side E of the third outer electrode facing the second outer electrode and the side F of the third outer electrode facing the fourth outer electrode, and the fourth outer electrode includes the side G of the fourth outer electrode facing the third outer electrode and the side H of the fourth outer electrode facing the first outer electrode. The side B, the side C, the side F, and the side G are inclined in the same direction with respect to the first direction, and 0.85 ≤ L/W ≤ 1.0 is satisfied, where L is a dimension in the first direction and W is a dimension in the second direction. Therefore, the first outer electrode and the third outer electrode disposed on the first surface are each disposed so as to extend toward the center in the second direction, thus making it possible to improve the self-alignment properties during mounting of the multilayer ceramic capacitor.

### Advantageous Effects of Invention

The present invention provides a multilayer ceramic capacitor capable of improving self-alignment properties during mounting.

The above and other objects, features, and advantages of the present invention will become more apparent from the following description of embodiments of the present invention with reference to the drawings.

### Brief Description of Drawings

[Fig. 1] Fig. 1 is an external perspective view from one side illustrating an example of a multilayer ceramic capacitor according to a first embodiment of the present invention.
[Fig. 2] Fig. 2 is an external perspective view from the other side illustrating an example of the multilayer ceramic capacitor according to the first embodiment of the present invention.
[Fig. 3] Fig. 3 is a plan view illustrating an example of the multilayer ceramic capacitor according to the first embodiment of the present invention.
[Fig. 4] Fig. 4 is a back view illustrating an example of the multilayer ceramic capacitor according to the first embodiment of the present invention.
[Fig. 5] Fig. 5 is a front view illustrating an example of the multilayer ceramic capacitor according to the first embodiment of the present invention.
[Fig. 6] Fig. 6 is a left side view illustrating an example of the multilayer ceramic capacitor according to the first embodiment of the present invention.
[Fig. 7] Fig. 7 is a right side view illustrating an example of the multilayer ceramic capacitor according to the first embodiment of the present invention.
[Fig. 8] Fig. 8 is a schematic sectional view taken along line VIII-VIII in Fig. 1.
[Fig. 9] Fig. 9 is a schematic sectional view taken along line IX-IX in Fig. 1.
[Fig. 10] Fig. 10 is a schematic sectional view taken along line X-X in Fig. 1.
[Fig. 11] Fig. 11 is a schematic sectional view taken along line XI-XI in Fig. 1.
[Fig. 12A] Fig. 12A is a schematic sectional view taken along line XIIA-XIIA in Fig. 4.
[Fig. 12B] Fig. 12B is a schematic sectional view taken along line XIIB-XIIB in Fig. 4.
[Fig. 13] Fig. 13 is an exploded perspective view of a multilayer body illustrated in Fig. 1.
[Fig. 14] Fig. 14 is a schematic sectional view illustrating an example of a multilayer ceramic capacitor according to a modification of the first embodiment of the present invention.
[Fig. 15] Fig. 15 is an external perspective view from one side illustrating an example of a multilayer ceramic capacitor according to a second embodiment of the present invention.
[Fig. 16] Fig. 16 is an external perspective view from the other side illustrating an example of the multilayer ceramic capacitor according to the second embodiment of the present invention.
[Fig. 17] Fig. 17 is a plan view illustrating an example of the multilayer ceramic capacitor according to the second embodiment of the present invention.
[Fig. 18] Fig. 18 is a back view illustrating an example of the multilayer ceramic capacitor according to the second embodiment of the present invention.
[Fig. 19] Fig. 19 is a front view illustrating an example of the multilayer ceramic capacitor according to the second embodiment of the present invention.
[Fig. 20] Fig. 20 is a left side view illustrating an example of the multilayer ceramic capacitor according to the second embodiment of the present invention.
[Fig. 21] Fig. 21 is a right side view illustrating an example of the multilayer ceramic capacitor according to the second embodiment of the present invention.
[Fig. 22] Fig. 22 is a schematic sectional view taken along line XXII-XXII in Fig. 15.
[Fig. 23] Fig. 23 is a schematic sectional view taken along line XX-XX in Fig. 15.
[Fig. 24] Fig. 24 is a schematic sectional view taken along line XIV-XIV in Fig. 15.
[Fig. 25] Fig. 25 is a schematic sectional view taken along line XXV-XXV in Fig. 15.

### Description of Embodiments

### A. First Embodiment

### 1. Multilayer Ceramic Capacitor

Next, an example of a multilayer ceramic capacitor 10 according to an embodiment of the present invention will be described.

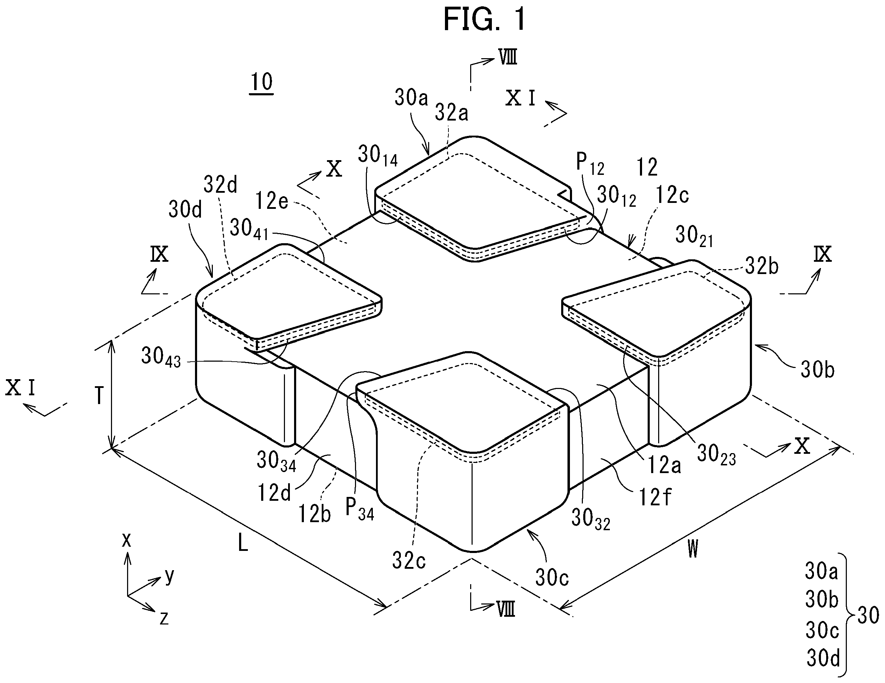

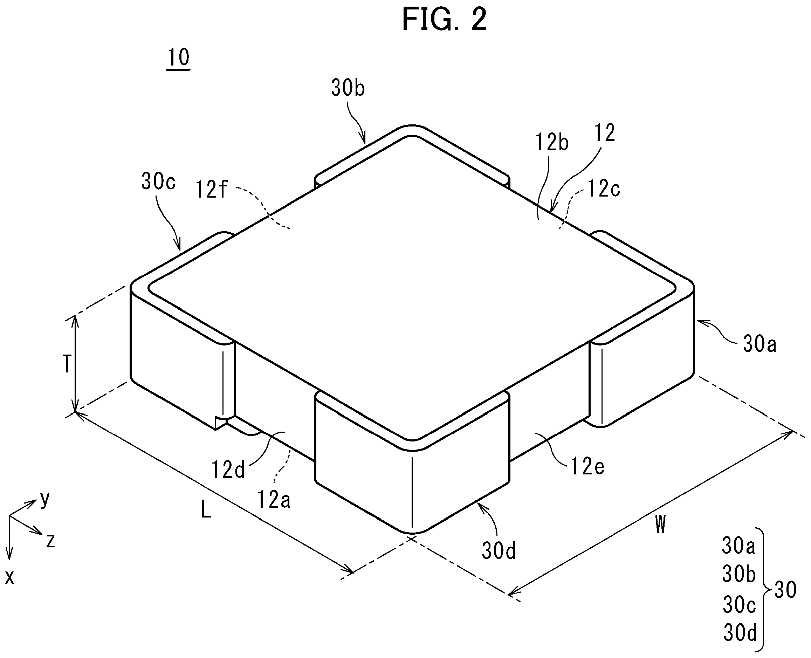

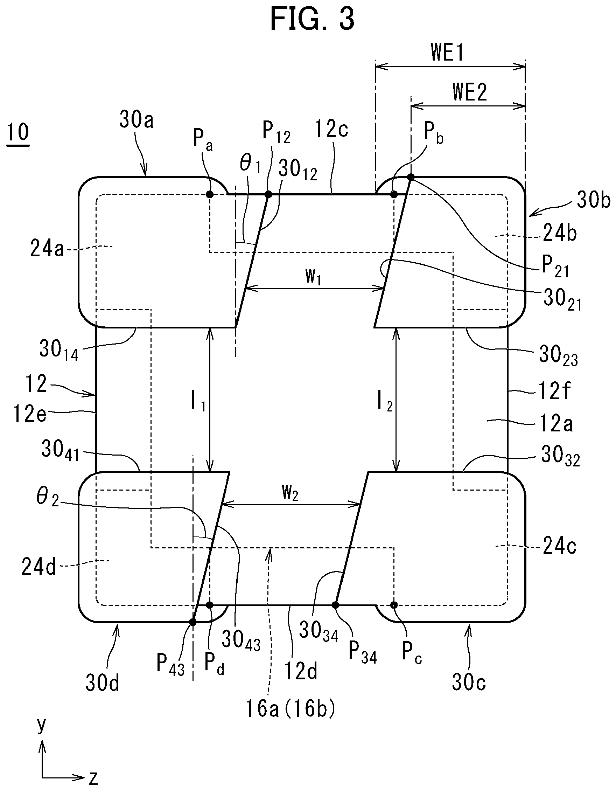

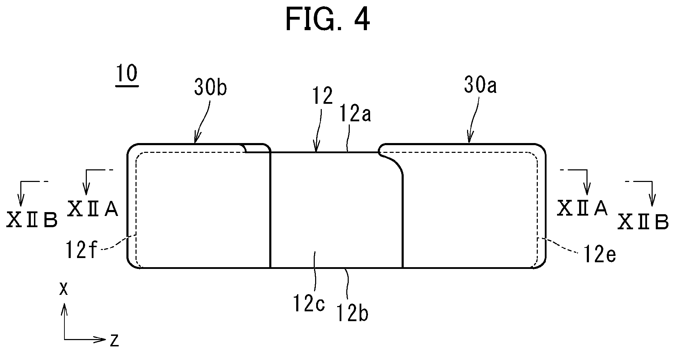

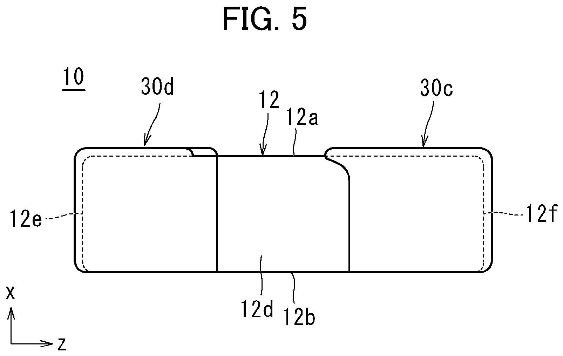

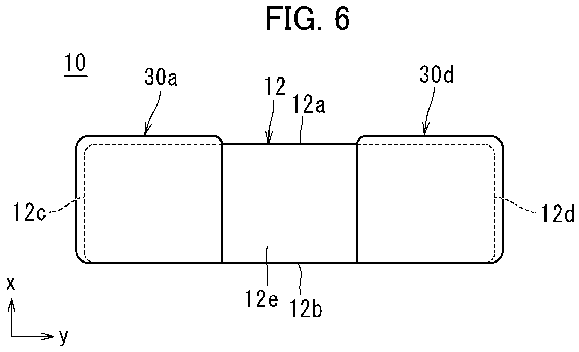

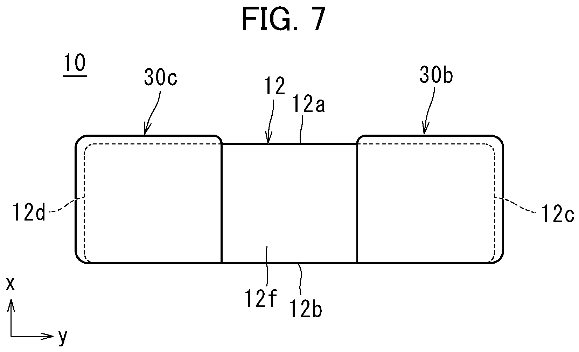

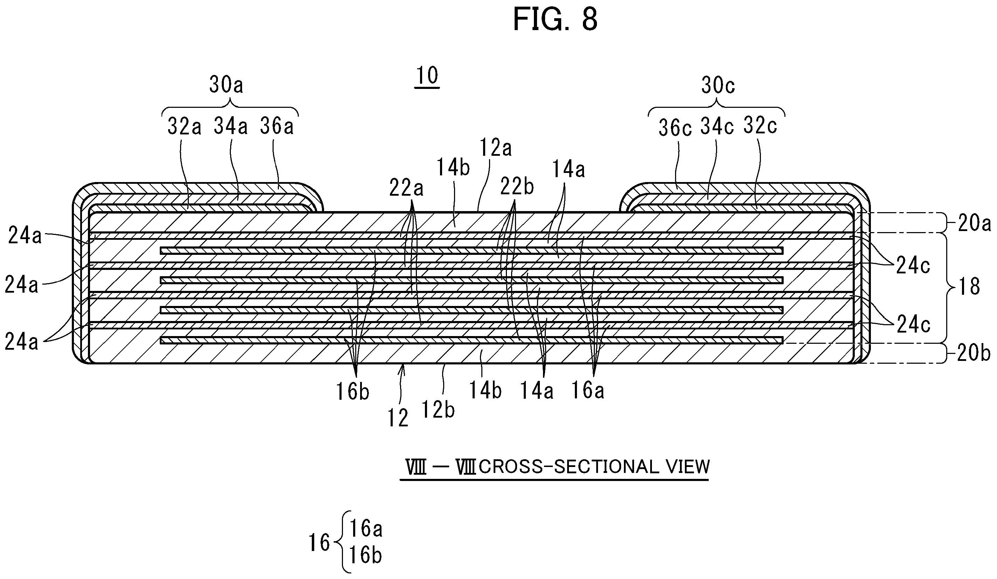

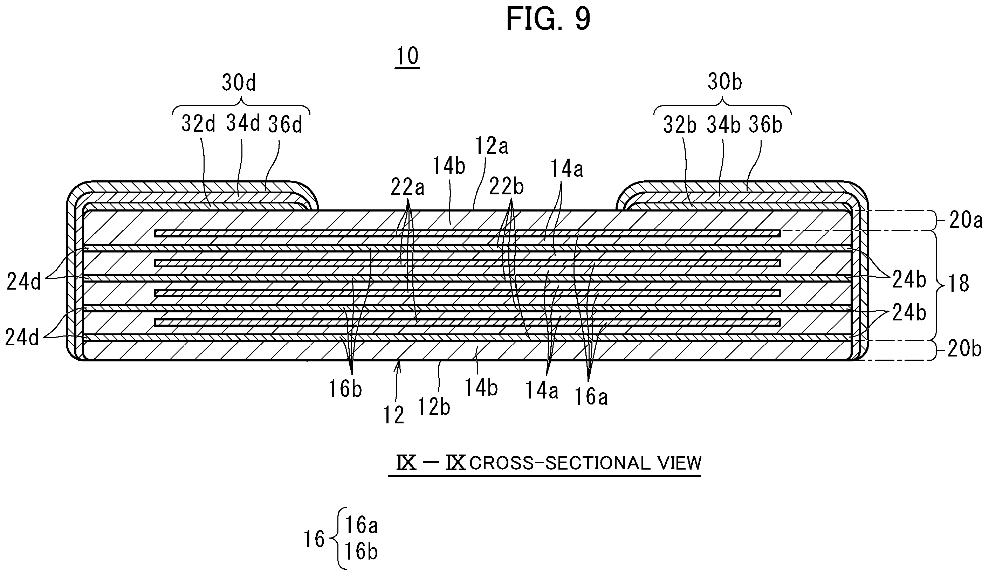

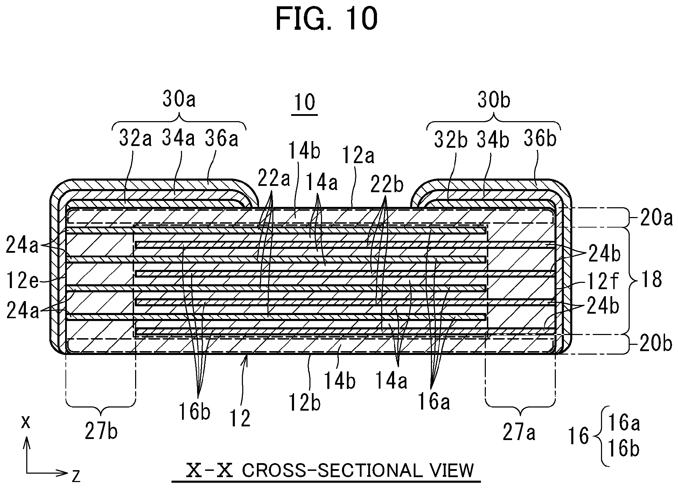

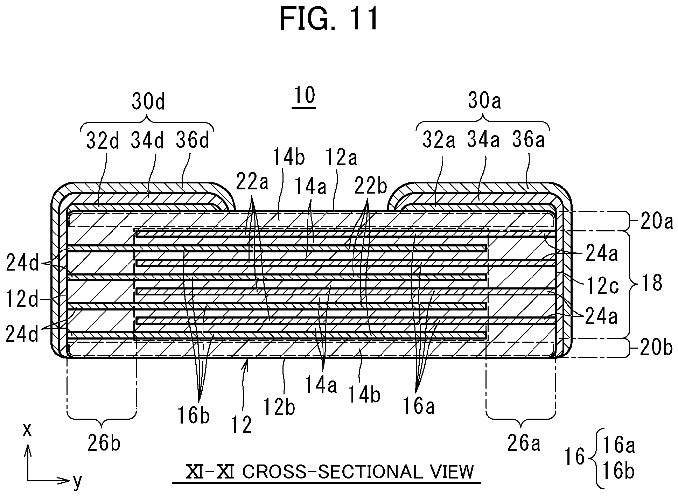

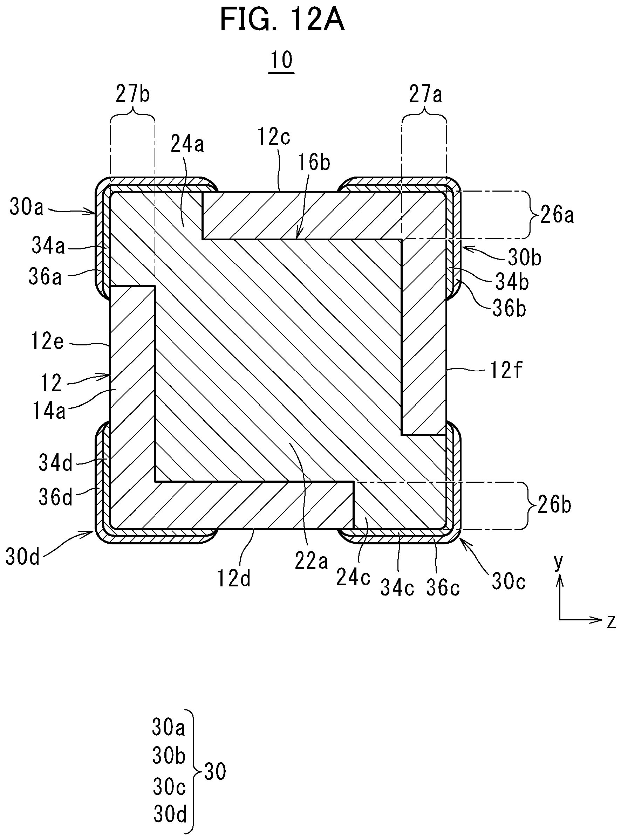

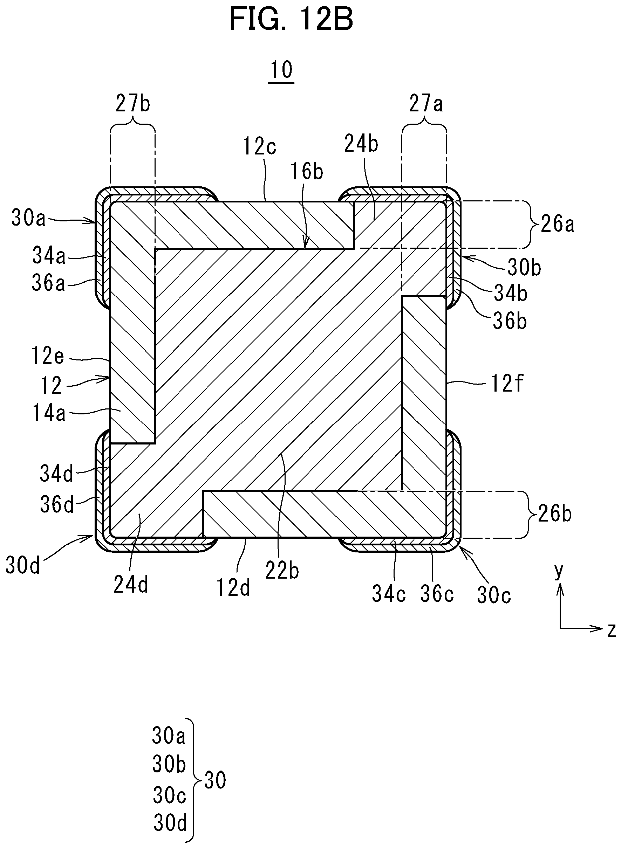

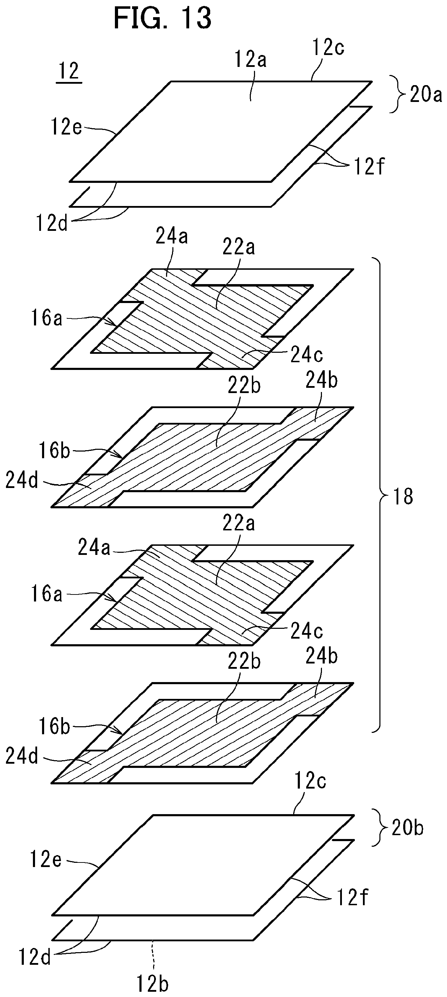

Fig. 1 is an external perspective view from one side illustrating an example of a multilayer ceramic capacitor according to a first embodiment of the present invention. Fig. 2 is an external perspective view from the other side illustrating an example of the multilayer ceramic capacitor according to the first embodiment of the present invention. Fig. 3 is a plan view illustrating an example of the multilayer ceramic capacitor according to the first embodiment of the present invention. Fig. 4 is a back view illustrating an example of the multilayer ceramic capacitor according to the first embodiment of the present invention. Fig. 5 is a front view illustrating an example of the multilayer ceramic capacitor according to the first embodiment of the present invention. Fig. 6 is a left side view illustrating an example of the multilayer ceramic capacitor according to the first embodiment of the present invention. Fig. 7 is a right side view illustrating an example of the multilayer ceramic capacitor according to the first embodiment of the present invention. Fig. 8 is a schematic sectional view taken along line VIII-VIII in Fig. 1. Fig. 9 is a schematic sectional view taken along line IX-IX in Fig. 1. Fig. 10 is a schematic sectional view taken along line X-X in Fig. 1. Fig. 11 is a schematic sectional view taken along line XI-XI in Fig. 1. Fig. 12A is a schematic sectional view taken along line XIIA-XIIA in Fig. 4. Fig. 12B is a schematic sectional view taken along line XIIB-XIIB in Fig. 4. Fig. 13 is an exploded perspective view of a multilayer body illustrated in Fig. 1.

The multilayer ceramic capacitor 10 includes a multilayer body 12 and a plurality of outer electrodes 30.

### (Multilayer Body)

The multilayer body 12 has a first surface 12a and a second surface 12b facing each other in a lamination direction x, a third surface 12c and a fourth surface 12d facing each other in a first direction y that is orthogonal to the lamination direction x, and a fifth surface 12e and a sixth surface 12f facing each other in a second direction z that is orthogonal to the lamination direction x and the first direction y. The lamination direction x is the direction connecting the first surface 12a and the second surface 12b of the multilayer body 12.

It is preferable that the corners and ridges of the multilayer body 12 are rounded. The corners are the portions where three adjacent surfaces of the multilayer body 12 intersect. The ridges are the portions where two adjacent surfaces of the multilayer body 12 intersect. Furthermore, the third surface 12c and the fourth surface 12d as well as the fifth surface 12e and the sixth surface 12f may have irregularities formed in part or in whole.

Either the first surface 12a or the second surface 12b may be roughened.

The multilayer body 12 includes a plurality of dielectric layers 14 and a plurality of inner electrodes 16. The dielectric layers 14 include an inner dielectric layer 14a and an outer dielectric layer 14b. The inner electrodes 16 include a first inner electrode 16a and a second inner electrode 16b.

The multilayer body 12 also includes an inner layer portion 18, a first outer layer portion 20a located on the first surface 12a side, and a second outer layer portion 20b located on the second surface 12b side.

The first outer layer portion 20a is located on the first surface 12a side of the multilayer body 12, and is an assembly of the plurality of outer dielectric layers 14b located between the first surface 12a and the inner electrode 16 closest to the first surface 12a.

The second outer layer portion 20b is located on the second surface 12b side of the multilayer body 12, and is an assembly of the plurality of outer dielectric layers 14b located between the second surface 12b and the inner electrode 16 closest to the second surface 12b.

The region sandwiched between the first outer layer portion 20a and the second outer layer portion 20b is the inner layer portion 18.

The inner layer portion 18 includes: the first inner electrode 16a having one end exposed to the third surface 12c and the fifth surface 12e and the other end exposed to the fourth surface 12d and the sixth surface 12f; the second inner electrode 16b having one end exposed to the third surface 12c and the sixth surface 12f and the other end exposed to the fourth surface 12d and the fifth surface 12e; and the inner dielectric layer 14a.

The dielectric layer 14 can be formed of a dielectric material, for example. The dielectric material can be, for example, a dielectric ceramic made mainly of BaTiO₃, CaTiO₃, SrTiO₃ or CaZrO₃. It is also possible to use a material obtained by adding a sub-component such as a Mn compound, an Fe compound, a Cr compound, a Co compound or a Ni compound to these main components. The inner dielectric layer 14a and the outer dielectric layer 14b may be made of the same dielectric material, or may be made of different dielectric materials in order to separate the functions of the inner layer portion 18 and the outer layer portions 20a and 20b. At least one of Si, Mg, Ba, Mn, and the like may be added as an additive.

The inner dielectric layer 14a containing a large amount of CaTiO₃ or CaZrO₃ as a dielectric component, for example, can reduce occurrence of insulation breakdown between the first inner electrode 16a and the second inner electrode 16b. The inner dielectric layer 14a, without being limited to the above, can also be made mainly of SrTiO₃ or the like. Alternatively, the inner dielectric layer 14a is preferably made of a material with a high dielectric constant, such as BaTiO₃, in order to increase the capacitance of the multilayer ceramic capacitor 10.

The dielectric layer 14 can include a plurality of crystal grains containing a perovskite compound with BaTiO₃ as its basic structure.

The thinner the dielectric layer 14, the larger the capacitance of the capacitor. Therefore, the crystal grain size is preferably 1 µm or less.

The number of the dielectric layers 14 to be laminated is not particularly limited, but is preferably 3 or more and 300 or less, including the first outer layer portion 20a and the second outer layer portion 20b. The thickness of the inner dielectric layer 14a is preferably, for example, 0.4 µm or more and 2.0 µm or less. The thickness of the outer dielectric layer 14b is preferably 2.0 µm or more and 100.0 µm or less.

A dimension L of the multilayer body 12 in the first direction y and a dimension W thereof in the second direction z satisfy 0.85 ≤ L/W ≤ 1.00, where the first direction y is the direction in which the third surface 12c and the fourth surface 12d face each other and the second direction z is the direction in which the fifth surface 12e and the sixth surface 12f face each other. Specifically, the multilayer body 12 has a substantially tetragonal shape.

### (Inner Electrode)

The inner electrodes 16 include a plurality of first inner electrodes 16a and a plurality of second inner electrodes 16b. The first inner electrodes 16a and the second inner electrodes 16b are alternately laminated with the dielectric layers 14 interposed therebetween.

The first inner electrode 16a is disposed on the surface of the inner dielectric layer 14a. The first inner electrode 16a faces the first surface 12a and the second surface 12b, includes a first counter electrode portion 22a facing the second inner electrode 16b, and is laminated in a direction connecting the first surface 12a and the second surface 12b.

The first inner electrode 16a is extended to the third surface 12c and the fifth surface 12e of the multilayer body 12 by a first extended electrode portion 24a, and is extended to the fourth surface 12d and the sixth surface 12f of the multilayer body 12 by a third extended electrode portion 24c. The width of the first extended electrode portion 24a extended to the third surface 12c may be about the same as the width of the first extended electrode portion 24a extended to the fifth surface 12e. The width of the third extended electrode portion 24c extended to the fourth surface 12d may be about the same as the width of the third extended electrode portion 24c extended to the sixth surface 12f.

The first inner electrode 16a is continuously extended to the third surface 12c and the fifth surface 12e of the multilayer body 12 by the first extended electrode portion 24a, and is continuously extended to the fourth surface 12d and the sixth surface 12f of the multilayer body 12 by the third extended electrode portion 24c. However, the first inner electrode 16a is not limited to the above and may be discontinuously extended.

The second inner electrode 16b is disposed on a surface of an inner dielectric layer 14a different from the inner dielectric layer 14a on which the first inner electrode 16a is disposed. The second inner electrode 16b faces the first surface 12a and the second surface 12b, includes a second counter electrode portion 22b facing the first inner electrode 16a, and is laminated in a direction connecting the first surface 12a and the second surface 12b.

The second inner electrode 16b is extended to the third surface 12c and the sixth surface 12f of the multilayer body 12 by a second extended electrode portion 24b, and is extended to the fourth surface 12d and the fifth surface 12e of the multilayer body 12 by a fourth extended electrode portion 24d. The width of the second extended electrode portion 24b extended to the third surface 12c may be about the same as the width of the second extended electrode portion 24b extended to the sixth surface 12f. The width of the fourth extended electrode portion 24d extended to the fourth surface 12d may be about the same as the width of the fourth extended electrode portion 24d extended to the fifth surface 12e.

The second inner electrode 16b is continuously extended to the third surface 12c and the sixth surface 12f of the multilayer body 12 by the second extended electrode portion 24b, and is continuously extended to the fourth surface 12d and the fifth surface 12e of the multilayer body 12 by the fourth extended electrode portion 24d. However, the second inner electrode 16b is not limited to the above and may be discontinuously extended.

When the multilayer ceramic capacitor 10 is viewed from the lamination direction x, a straight line connecting the first extended electrode portion 24a and the third extended electrode portion 24c of the first inner electrode 16a preferably intersects with a straight line connecting the second extended electrode portion 24b and the fourth extended electrode portion 24d of the second inner electrode 16b.

As illustrated in Fig. 11, the multilayer body 12 includes: a side portion (W gap) 26a of the multilayer body 12 located between one end in the first direction y of the second counter electrode portion 22b of the second inner electrode 16b and the third surface 12c; and a side portion (W gap) 26b of the multilayer body 12 located between the other end in the first direction y of the first counter electrode portion 22a of the first inner electrode 16a and the fourth surface 12d.

As illustrated in Fig. 10, the multilayer body 12 further includes: an end portion (L gap) 27a of the multilayer body 12 located between one end in the second direction z of the second counter electrode portion 22b of the second inner electrode 16b and the fifth surface 12e; and a side portion (L gap) 27b of the multilayer body 12 located between the other end in the second direction z of the first counter electrode portion 22a of the first inner electrode 16a and the sixth surface 12f.

The first inner electrode 16a and the second inner electrode 16b can be made of, but not limited to, an appropriate conductive material, such as metals such as Ni, Cu, Ag, Pd, and Au, for example, or alloys containing at least one of these metals, such as Ni-Cu alloy and Ag-Pd alloy. The first inner electrode 16a and the second inner electrode 16b may be made of the same conductive material, or may be made of different conductive materials.

An Sn layer provided between the first and second inner electrodes 16a and 16b and the inner dielectric layer 14a can alleviate electric field concentration at the interface between the inner electrode 16 and the dielectric layer 14. This leads to improved high-temperature load reliability.

The total number of the first inner electrodes 16a and the second inner electrodes 16b is preferably 3 or more and 300 or less. The thickness of the first inner electrode 16a and the second inner electrode 16b is not particularly limited, but is preferably 0.2 µm or more and 2.0 µm or less, for example.

The multilayer body 12 of the multilayer ceramic capacitor 10 may have a configuration described below.

In the multilayer ceramic capacitor 10, the third surface 12c to the sixth surface 12f of the multilayer body 12 may be bent so as to be concave toward the center of the multilayer body 12 when viewed in the lamination direction x. In other words, the third surface 12c to the sixth surface 12f of the multilayer body 12 may be warped. In this case, the center of the bend and warpage is preferably near the center of the third surface 12c to the sixth surface 12f. This makes it possible to increase the distance between adjacent outer electrodes 30 to be described later, and thus to reduce the risk of conduction between the outer electrodes 30.

In addition, when viewed in at least one of the first direction y and the second direction z, the region where the inner electrode 16 is extended onto the third surface 12c to the sixth surface 12f preferably has an R from the first surface 12a to the second surface 12b. This increases the exposed area of the inner electrode 16, thus making it possible to improve the contact area between the inner electrode 16 and the outer electrode 30.

### (Outer Electrode)

As illustrated in Figs. 1 to 7, the outer electrode 30 is disposed on the multilayer body 12.

The outer electrode 30 includes a plurality of outer electrodes 30 connected to the first inner electrode 16a and the second inner electrode 16b. The outer electrode 30 includes a first outer electrode 30a, a second outer electrode 30b, a third outer electrode 30c, and a fourth outer electrode 30d.

The first outer electrode 30a is disposed on the third surface 12c and the fifth surface 12e so as to cover the first extended electrode portion 24a of the first inner electrode 16a, and also to cover a part of the first surface 12a. The first outer electrode 30a is electrically connected to the first extended electrode portion 24a of the first inner electrode 16a.

The second outer electrode 30b is disposed on the third surface 12c and the sixth surface 12f so as to cover the second extended electrode portion 24b of the second inner electrode 16b, and also to cover a part of the first surface 12a. The second outer electrode 30b is electrically connected to the second extended electrode portion 24b of the second inner electrode 16b.

The third outer electrode 30c is disposed on the fourth surface 12d and the sixth surface 12f so as to cover the third extended electrode portion 24c of the first inner electrode 16a, and also to cover a part of the first surface 12a. The third outer electrode 30c is electrically connected to the third extended electrode portion 24c of the first inner electrode 16a.

The fourth outer electrode 30d is disposed on the fourth surface 12d and the fifth surface 12e so as to cover the fourth extended electrode portion 24d of the second inner electrode 16b, and also to cover a part of the first surface 12a. The fourth outer electrode 30d is electrically connected to the fourth extended electrode portion 24d of the second inner electrode 16b.

The first outer electrode 30a has, on the first surface 12a, a side 30₁₂ facing the second outer electrode 30b and a side 30₁₄ facing the fourth outer electrode 30d.

The second outer electrode 30b has, on the first surface 12a, a side 30₂₁ facing the first outer electrode 30a and a side 30₂₃ facing the third outer electrode 30c.

The third outer electrode 30c has, on the first surface 12a, a side 30₃₂ facing the second outer electrode 30b and a side 30₃₄ facing the fourth outer electrode 30d.

The fourth outer electrode 30d has, on the first surface 12a, a side 30₄₁ facing the first outer electrode 30a and a side 30₄₃ facing the third outer electrode 30c.

The side 30₁₂, the side 30₂₁, the side 30₃₄, and the side 30₄₃ are all inclined in the same direction with respect to the first direction y.

As a result, an end portion P₁₂ of the side 30₁₂ on the third surface 12c side is located at the inner side portion (closer to the center) in the second direction z than an end portion Pₐ of the first inner electrode 16a that is exposed on the third surface 12c. Likewise, an end portion P₃₄ of the side 30₃₄ on the fourth surface 12d side is located at the inner side portion (closer to the center) in the second direction z than an end portion P_{c} of the first inner electrode 16a that is exposed on the fourth surface 12d.

On the other hand, an end portion P₂₁ of the side 30₂₁ on the third surface 12c side is located at the outer side portion in the second direction z than an end portion P_{b} of the second inner electrode 16b that is exposed on the third surface 12c. Likewise, an end portion P₄₃ of the side 30₄₃ on the fourth surface 12d side is located at the outer side portion in the second direction z than an end portion P_{d} of the second inner electrode 16b that is exposed on the fourth surface 12d.

As a result, the self-alignment properties of the multilayer ceramic capacitor 10 when mounted by soldering in the first direction y can further improve mountability of the capacitor.

It is preferable that the sides 30₁₂ and 30₄₃ have inclination angles θ₁ and θ₂ of 3° or more and 15° or less with respect to the first direction y and are inclined in the same direction.

As a result, the self-alignment properties of the multilayer ceramic capacitor 10 when mounted by soldering in the first direction y can further improve the mountability of the capacitor.

The end portion of the side 30₂₁ on the third surface 12c side is located at the outer side portion in the second direction z, with respect to the length of the second outer electrode 30b disposed on the third surface 12c, than the end portion at the inner side portion in the second direction z of the second outer electrode 30b disposed on the third surface 12c. Here, WE1 is the distance in the second direction z of the second outer electrode 30b when viewed from the lamination direction x. WE2 is the distance in the second direction z between the end portion P₂₁ of the side 30₂₁ on the third surface 12c side and the outermost end in the second direction z of the second outer electrode 30b. In this case, the ratio of WE2 to WE1 is preferably 54% or more and 98% or less.

The above configuration is also the same for P₄₃ of the side 30₄₃ on the fourth surface 12d side.

This allows the multilayer ceramic capacitor 10 to be stably attracted and held in the case of mounting the multilayer ceramic capacitor 10 using a mount machine or the like.

It is preferable that the absolute value of the difference between a distance w₁ in the second direction z between the first outer electrode 30a and the second outer electrode 30b and a distance w₂ in the second direction z between the third outer electrode 30c and the fourth outer electrode 30d is 5 µm or less.

It is preferable that the absolute value of the difference between a distance l₁ in the first direction y between the first outer electrode 30a and the fourth outer electrode 30d and a distance l₂ in the first direction y between the second outer electrode 30b and the third outer electrode 30c is 5 µm or less.

It is preferable that the absolute value of the difference between the distance w₁ in the second direction z between the first outer electrode 30a and the second outer electrode 30b and the distance l₁ in the first direction y between the first outer electrode 30a and the fourth outer electrode 30d is 5 µm or less.

In the multilayer body 12, the first counter electrode portion 22a of the first inner electrode 16a and the second counter electrode portion 22b of the second inner electrode 16b face each other across the inner dielectric layer 14a, thus forming an electrostatic capacity. Therefore, the electrostatic capacity can be obtained between the first outer electrode 30a and the second outer electrode 30b, to which the first inner electrode 16a is connected, and the third outer electrode 30c and the fourth outer electrode 30d, to which the second inner electrode 16b is connected, thus realizing the capacitor characteristics.

It is preferable that the first outer electrode 30a, the second outer electrode 30b, the third outer electrode 30c, and the fourth outer electrode 30d each include a thin film layer 32, an underlying plating layer 34, and a surface plating layer 36.

In other words, the first outer electrode 30a preferably includes a first thin film layer 32a, a first underlying plating layer 34a, and a first surface plating layer 36a. The second outer electrode 30b preferably includes a second thin film layer 32b, a second underlying plating layer 34b, and a second surface plating layer 36b. The third outer electrode 30c preferably includes a third thin film layer 32c, a third underlying plating layer 34c, and a third surface plating layer 36c. The fourth outer electrode 30d preferably includes a fourth thin film layer 32d, a fourth underlying plating layer 34d, and a fourth surface plating layer 36d.

### (Thin Film Layer)

The thin film layer 32 includes the first thin film layer 32a, the second thin film layer 32b, the third thin film layer 32c, and the fourth thin film layer 32d.

The first thin film layer 32a is disposed so as to partially cover the first surface 12a of the multilayer body 12 on the third surface 12c side and the fifth surface 12e side, but not cover the third surface 12c and the fifth surface 12e of the multilayer body 12.

The second thin film layer 32b is disposed so as to partially cover the first surface 12a of the multilayer body 12 on the fourth surface 12d side and the sixth surface 12f side, but not cover the fourth surface 12d and the sixth surface 12f.

The third thin film layer 32c is disposed so as to partially cover the first surface 12a of the multilayer body 12 on the third surface 12c side and the sixth surface 12f side, but not cover the third surface 12c and the sixth surface 12f.

The fourth thin film layer 32d is disposed so as to partially cover the first surface 12a of the multilayer body 12 on the fourth surface 12d side and the fifth surface 12e side, but not cover the fourth surface 12d and the fifth surface 12e.

The first to fourth thin film layers 32a to 32d are each preferably formed by depositing metal particles by sputtering, vapor deposition or the like. This allows the first to fourth thin film layers 32a to 32d to have a thickness of 1 µm or less in the direction connecting the first surface 12a and the second surface 12b of the multilayer body 12. The dimension of the multilayer ceramic capacitor 10 in the lamination direction x can thus be sufficiently reduced, making it possible to reduce the height of the multilayer ceramic capacitor 10.

The dimension of the first to fourth thin film layers 32a to 32d in the lamination direction x can be measured as follows. Specifically, in the case of forming the thin film layers by depositing metal particles, a fluorescent X-ray device can be used to calculate the thickness from the concentration of a specified element using a calibration curve method for the corresponding metal species. Alternatively, a method can be used in which an FIB cross-section of a component is observed using a scanning microscope, and the thickness is measured from the actual observed image.

When the first to fourth thin film layers 32a to 32d are formed by a thin film formation method, these thin film layers are preferably made of metal such as Cu or Ni.

The thin film layer 32 of the multilayer ceramic capacitor 10 illustrated in Fig. 1 is formed by depositing metal particles by sputtering. In this case, when the thickness of the thin film layer 32 is 1 µm or less, the dimension in the lamination direction x can be sufficiently reduced.

The first to fourth thin film layers 32a to 32d can be formed taking into consideration their respective functions. For example, taking into consideration the adhesion to the multilayer body 12, NiCr or NiCu is preferably used as the main component. Furthermore, the first to fourth thin film layers 32a to 32d may have a multilayer structure such as a two-layer structure of NiCr and NiCu.

The thin film layer 32 may be formed by screen printing or the like and contain a dielectric material and a metal component. In this case, the thin film layer 32 and the ceramic of the multilayer body 12 are fixed to each other, and the fixing strength between the multilayer body 12 and the outer electrode 30 can be further improved. In this case, the thin film layer 32 may contain a ceramic component having the same main component as the inner dielectric layer 14a, in addition to the metal component. The ceramic component contained in the thin film layer 32 can reduce the difference in thermal expansion coefficient between the multilayer body 12 and the thin film layer 32, thus relaxing the stress applied to the thin film layer 32. However, the metal component may be other metal components, without being limited to Cu and Ni, and a glass component may be included in addition to the ceramic component. Examples of the glass component include oxides of Ba (barium), Sr (strontium), Si (silicon), Ca (calcium), Zn, Al and B (boron). Examples of other metal components include Mg, Cr, Sr, Al, Na, Fe, and the like. The thin film layer 32 may have a discontinuous shape. The term "discontinuous" means that the thin film layer 32 is formed discontinuously when viewed from a direction perpendicular to the longitudinal direction.

For example, in the case of forming the thin film layer 32 by using a ceramic-containing material, a method is employed in which a photograph of a cross section is taken using a digital microscope (manufactured by Keyence Corporation: VHX-5000) after polishing the cross section, and then the thickness is calculated from the photograph of the cross section. There is also another method in which the thickness and the like are measured from an actual observed image of an FIB cross-section of a component, using a scanning microscope.

### (Underlying Plating Layer)

The underlying plating layer 34 includes a first underlying plating layer 34a, a second underlying plating layer 34b, a third underlying plating layer 34c, and a fourth underlying plating layer 34d.

The first underlying plating layer 34a is disposed so as to cover the first thin film layer 32a as well as the third surface 12c and the fifth surface 12e of the multilayer body 12.

The second underlying plating layer 34b is disposed so as to cover the second thin film layer 32b as well as the fourth surface 12d and the sixth surface 12f of the multilayer body 12.

The third underlying plating layer 34c is disposed so as to cover the third thin film layer 32c as well as the third surface 12c and the sixth surface 12f of the multilayer body 12.

The fourth underlying plating layer 34d is disposed so as to cover the fourth thin film layer 32d as well as the fourth surface 12d and the fifth surface 12e of the multilayer body 12.

The underlying plating layer 34 includes at least one selected from the group consisting of, for example, Cu, Ni, Sn, Ag, Pd, Ag-Pd alloy, Au, and the like. The underlying plating layer 34 is preferably Cu plating. In this case, the underlying plating layer 34 may be directly connected to the inner electrode 16. The underlying plating layer 34 may also include another Cu plating layer with a different particle size.

The underlying plating layer 34 preferably has a thickness of, for example, 1 µm or more and 10 µm or less.

### (Surface Plating Layer)

The surface plating layer 36 includes a first surface plating layer 36a, a second surface plating layer 36b, a third surface plating layer 36c, and a fourth surface plating layer 36d.

The first surface plating layer 36a is disposed so as to cover the first underlying plating layer 34a. The second surface plating layer 36b is disposed so as to cover the second underlying plating layer 34b. The third surface plating layer 36c is disposed so as to cover the third underlying plating layer 34c. The fourth surface plating layer 36d is disposed so as to cover the fourth underlying plating layer 34d.

The surface plating layer 36 may be only Sn plating, for example, or may be Ni plating, Sn plating, or have a two-layer structure of Ni plating and Cu plating.

The surface plating layer 36 preferably has a thickness of, for example, 0.5 µm or more and 10 µm or less.

The plating layer may be formed of only the underlying plating layer 34. In this case, the first underlying plating layer 34a is disposed so as to cover the first thin film layer 32a, and the second underlying plating layer 34b is disposed so as to cover the second thin film layer 32b. Similarly, the third underlying plating layer 34c is disposed so as to cover the third thin film layer 32c, and the fourth underlying plating layer 34d is disposed so as to cover the fourth thin film layer 32d.

The plating layer preferably contains at least one type of metal selected from the group consisting of, for example, Cu, Ni, Sn, Pb, Au, Ag, Pd, Bi, Zn, and the like or an alloy containing the metal. The plating layer preferably does not contain glass.

The metal ratio per unit volume of the plating layer is preferably 99 volume % or more.

The thickness of each plating layer is preferably 0.5 µm or more and 10.0 µm or less.

L dimension is the dimension in the first direction y of the multilayer ceramic capacitor 10 including the multilayer body 12 and the outer electrode 30. T dimension is the dimension in the lamination direction x of the multilayer ceramic capacitor 10 including the multilayer body 12 and the outer electrode 30. W dimension is the dimension in the second direction z of the multilayer ceramic capacitor 10 including the multilayer body 12 and the outer electrode 30.

The dimensions of the multilayer ceramic capacitor 10 are preferably such that the L dimension in the first direction y is 0.2 mm or more and 3.2 mm or less, the T dimension in the lamination direction x is 0.04 mm or more and 0.22 mm or less, and the W dimension in the second direction z is 0.2 mm or more and 3.2 mm or less. The dimensions of the multilayer ceramic capacitor 10 preferably satisfy 0.85 ≤ L/W ≤ 1.00. This allows the multilayer body 12 to have a substantially tetragonal shape, thus improving the degree of freedom of mounting.

In the multilayer ceramic capacitor 10 illustrated in Fig. 1, the side 30₁₂, the side 30₂₁, the side 30₃₄, and the side 30₄₃ are all inclined in the same direction with respect to the first direction y, and the dimension L in the first direction y and the dimension W in the second direction z of the multilayer body 12 satisfy 0.85 ≤ L/W ≤ 1.00. Therefore, the first outer electrode 30a and the third outer electrode 30c disposed on the first surface 12a are each disposed so as to extend toward the center in the second direction z. This makes it possible to improve the self-alignment properties during mounting of the multilayer ceramic capacitor 10.

### 2. Modification

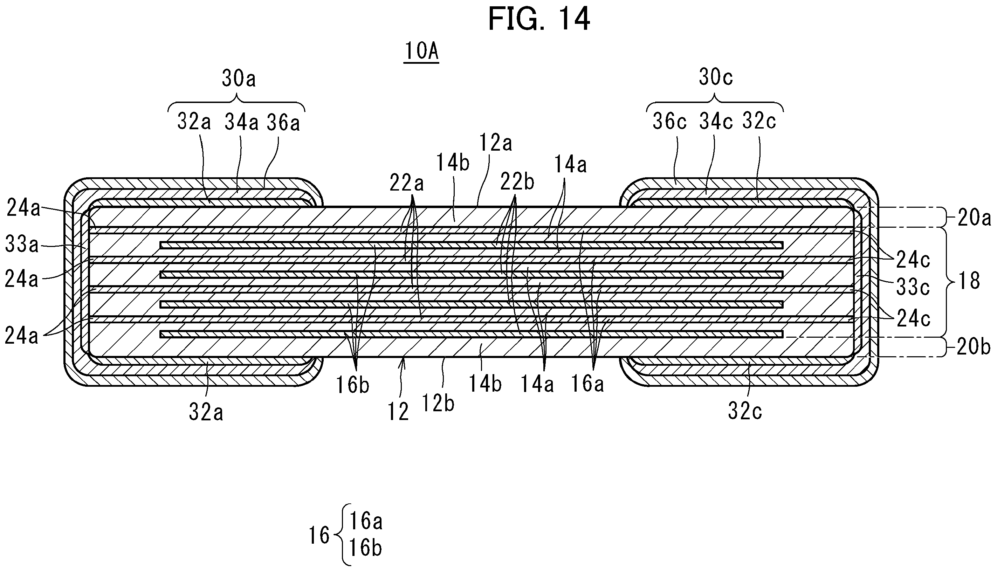

Next, an example of a multilayer ceramic capacitor 10A according to a modification of the first embodiment of the present invention will be described. Fig. 14 is a schematic sectional view illustrating an example of a multilayer ceramic capacitor according to a first modification of the first embodiment of the present invention. However, the same or corresponding configurations as those in Figs. 1 to 11 will be denoted by the same reference numerals, and detailed description thereof will be omitted.

As illustrated in Fig. 14, an outer electrode 30 of the multilayer ceramic capacitor 10A according to the modification of the first embodiment includes a direct plating layer 33.

### (Direct Plating Layer)

A first outer electrode 30a includes a first direct plating layer 33a. A third outer electrode 30C includes a third direct plating layer 33c. Although not illustrated, a second outer electrode 30b includes a second direct plating layer, and a fourth outer electrode 30d includes a fourth direct plating layer.

The first direct plating layer 33a is disposed so as to partially cover a third surface 12c and a fifth surface 12e of a multilayer body 12, as well as a ridge portion sandwiched therebetween. The first direct plating layer 33a is electrically connected directly to a first extended electrode portion 24a of a first inner electrode 16a.

The third direct plating layer 33c is disposed so as to partially cover a fourth surface 12d and a sixth surface 12f of the multilayer body 12, as well as a ridge portion sandwiched therebetween. The third direct plating layer 33c is electrically connected directly to a third extended electrode portion 24c of the first inner electrode 16a.

Although not illustrated, the same applies to the second direct plating layer of the second outer electrode 30b and the fourth direct plating layer of the fourth outer electrode 30d.

The first direct plating layer 33a of the first outer electrode 30a preferably has its upper end disposed so as to overlap the underside of the first thin film layer 32a on the ridge portion formed by the first surface 12a and the third and fifth surfaces 12c and 12e of the multilayer body 12.

The third direct plating layer 33c of the third outer electrode 30c preferably has its upper end disposed so as to overlap the underside of the second thin film layer 32b on the ridge portion formed by the first surface 12a and the fourth and sixth surfaces 12d and 12f of the multilayer body 12.

Although not illustrated, the same applies to the second direct plating layer of the second outer electrode 30b and the fourth direct plating layer of the fourth outer electrode 30d.

The first direct plating layer 33a may be partially disposed so as to wrap around to the second surface 12b. The third direct plating layer 33c may be partially disposed so as to wrap around to the second surface 12b. The second direct plating layer and the fourth direct plating layer may also be partially disposed so as to wrap around to the second surface 12b.

The upper ends of the first direct plating layer 33a and the third direct plating layer 33c may be disposed so as to be spaced apart from the first thin film layer 32a and the third thin film layer 32c. Likewise, the upper ends of the second direct plating layer and the fourth direct plating layer may be disposed so as to be spaced apart from the second thin film layer 32b and the fourth thin film layer 32d.

The direct plating layer 33 is not particularly limited as long as it contains at least one type of metal selected from the group consisting of, for example, Cu, Ni, Ag, Pd, Ag-Pd alloy, Au, and the like as the main metal component. When the first inner electrode 16a and the second inner electrode 16b are formed, for example, using Ni, Cu plating having good bondability with Ni is preferably used for the direct plating layer 33.

The direct plating layer 33 is formed by plating growth from the inner electrode 16.

Each direct plating layer 33 preferably has a thickness of 0.5 µm or more and 10.0 µm or less.

The multilayer ceramic capacitor 10A according to the modification of the first embodiment illustrated in Fig. 14 has the same effect as that of the multilayer ceramic capacitor 10 described above.

Specifically, the formation of the direct plating layer 33 on each side surface of the multilayer body 12 makes it possible to reduce the thickness in the lamination direction of the outer electrode 30 formed on the first surface 12a. This makes it possible to provide a multilayer ceramic capacitor with a reduced height without impairing mountability during mounting.

### 3. Method for Manufacturing Multilayer Ceramic Capacitor

A method for manufacturing a multilayer ceramic capacitor according to the first embodiment will be described below.

First, a dielectric sheet and a conductive paste for inner electrodes are prepared. The dielectric sheet and the conductive paste for inner electrodes contain a binder and a solvent. Known binders and solvents can be used.

Next, predetermined patterns are printed on the dielectric sheet using the conductive paste for inner electrodes by inkjet printing, screen printing, gravure printing or the like, for example. A dielectric sheet having a first inner electrode pattern formed thereon and a dielectric sheet having a second inner electrode pattern formed thereon are thus prepared. Thereafter, the sheet having the first inner electrode pattern printed thereon and the sheet having the second inner electrode pattern printed thereon are laminated to form a portion to serve as an inner layer portion 18.

Note that, when the patterns are printed using each conductive paste, the pattern using the conductive paste for inner electrodes is printed first.

In the case of forming the printing pattern of the inner electrodes by, for example, gravure printing, a gravure plate used in the gravure printing is designed to form the graphic pattern of the first inner electrode and then changed to the structure corresponding to the graphic pattern of the second inner electrode. This makes it possible to form the desired respective inner electrodes.

Furthermore, in the case of forming the printing pattern of the inner electrode layer by screen printing, a screen printing mask is designed to form the graphic pattern of the first inner electrode and then changed to the structure corresponding to the graphic pattern of the second inner electrode. This makes it possible to form the desired inner electrodes.

A predetermined number of dielectric sheets having no inner electrode patterns printed thereon are then laminated to form a portion to serve as a first outer layer portion 20a on the first surface 12a side. Thereafter, the portion to serve as the inner layer portion 18 prepared above is laminated, and the predetermined number of dielectric sheets having no inner electrode patterns printed thereon are laminated on the portion to serve as the inner layer portion 18 to form a portion to serve as a second outer layer portion 20b on the second surface 12b side. A multilayer sheet is thus prepared.

Next, the multilayer sheet is pressed in the lamination direction by means of an isostatic press or the like to produce a multilayer block.

Then, the multilayer block is cut to a predetermined size, thereby cutting out a multilayer chip. In this event, the corners and ridges of the multilayer chip may be rounded by barrel polishing or the like.

Next, the multilayer chip is fired to produce a multilayer body 12. The firing temperature depends on the ceramic and inner electrode materials, but is preferably 900 °C or higher and 1400 °C or lower.

Thereafter, an outer electrode 30 is formed on the multilayer body 12.

Specifically, the multilayer body 12 thus obtained is placed on a work table, and a predetermined mask is used to form a thin film layer 32 on the first surface 12a by sputtering.

Then, an underlying plating layer 34 is formed on the thin film layer 32 and the surface of the multilayer body 12, and a surface plating layer 36 is formed so as to cover the underlying plating layer 34. More specifically, a Cu plating layer is formed as the underlying plating layer 34 on the thin film layer 32. Thereafter, a Ni plating layer and a Sn plating layer are formed as the surface plating layer 36 on the surface of the underlying plating layer 34. Either electrolytic plating or electroless plating may be used for the plating process. However, electroless plating requires pretreatment with a catalyst or the like to improve the plating deposition speed, resulting in a disadvantage of complicating the process. Therefore, it is usually preferable to employ electrolytic plating.

The multilayer ceramic capacitor 10 according to the embodiment illustrated in Fig. 1 can thus be manufactured. In the case of manufacturing the multilayer ceramic capacitor 10A according to the modification illustrated in Fig. 14, the shapes of the corresponding parts are appropriately changed in each process.

### B. Second Embodiment

### 1. Multilayer Ceramic Capacitor

An example of a multilayer ceramic capacitor 110 according to a second embodiment of the present invention will be described.

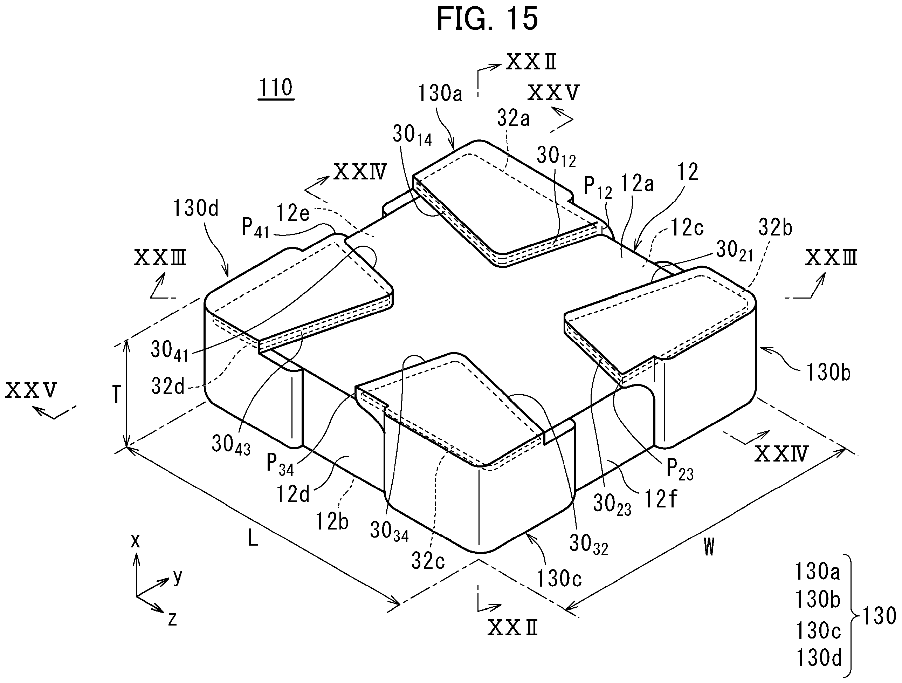

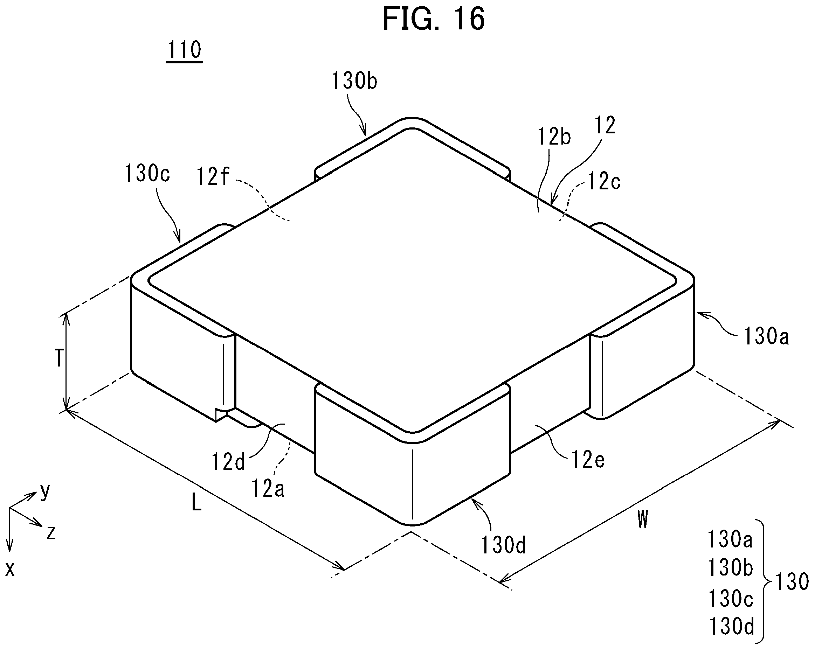

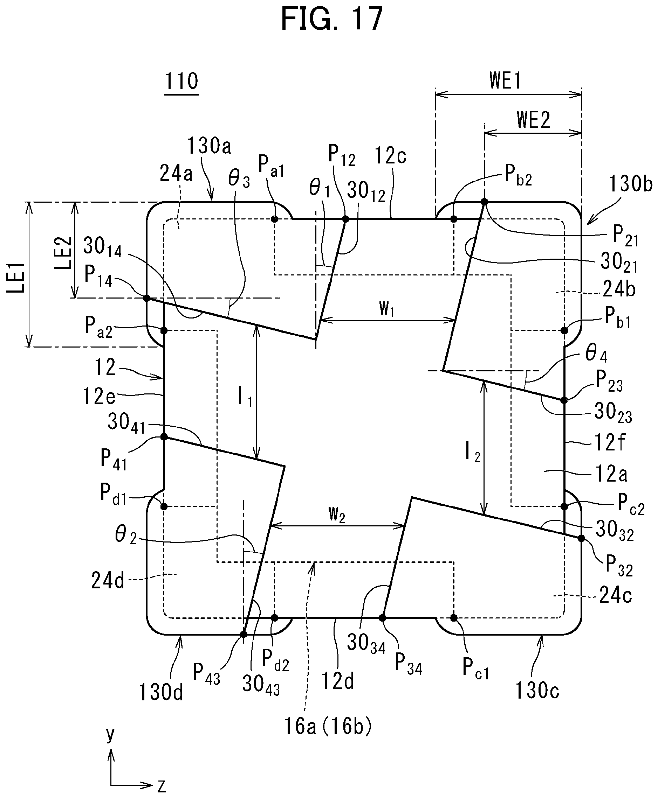

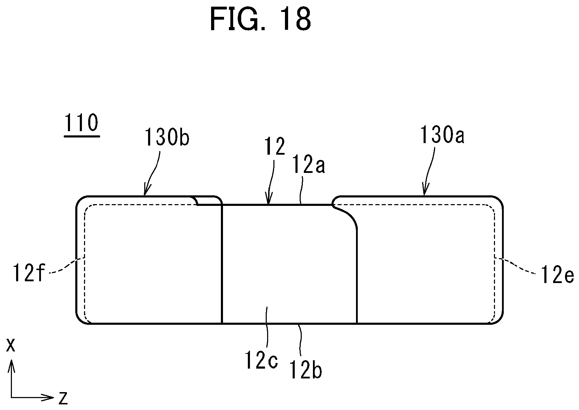

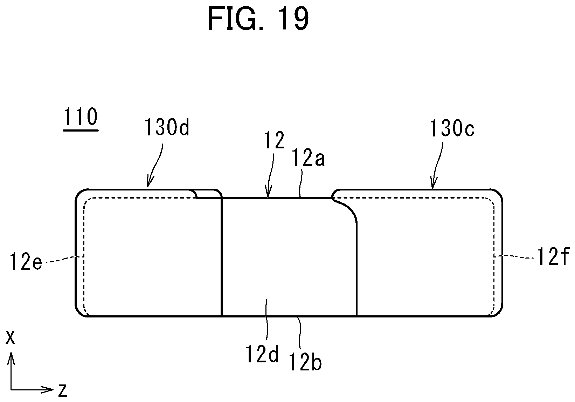

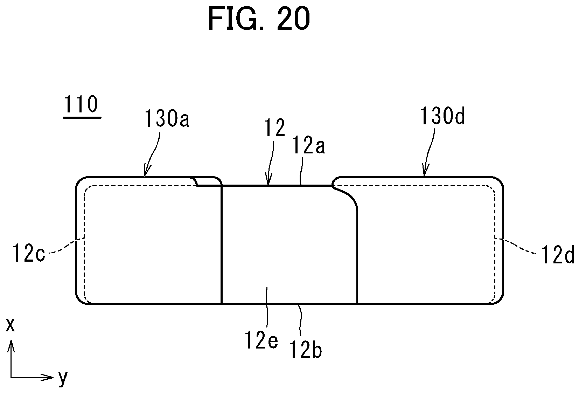

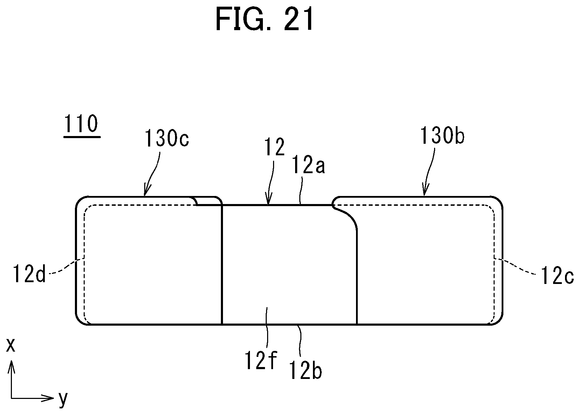

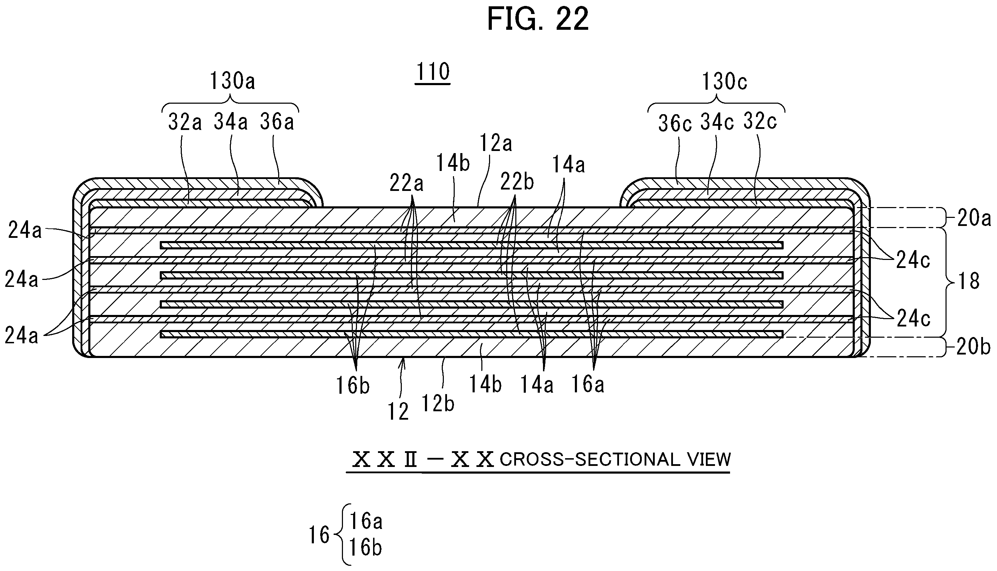

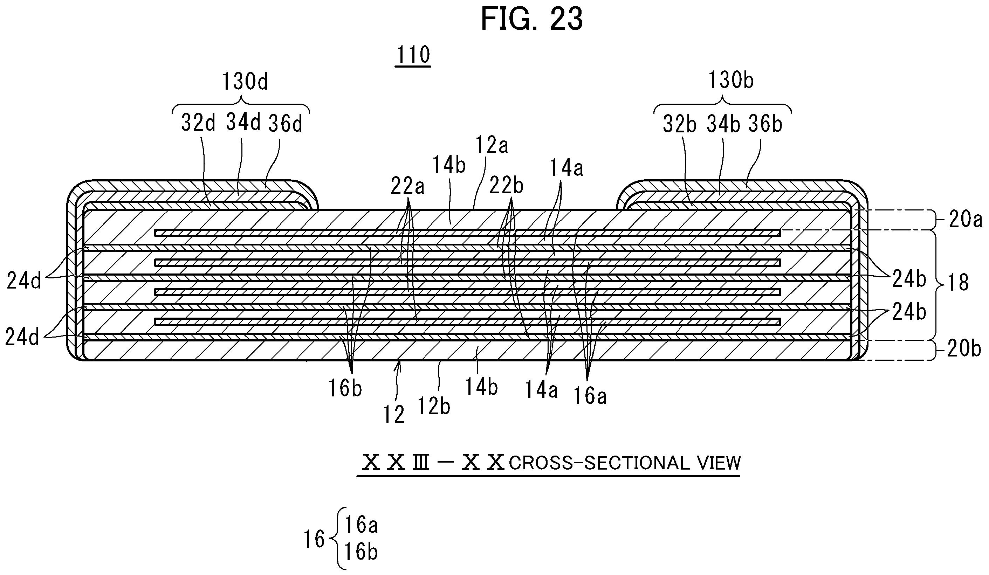

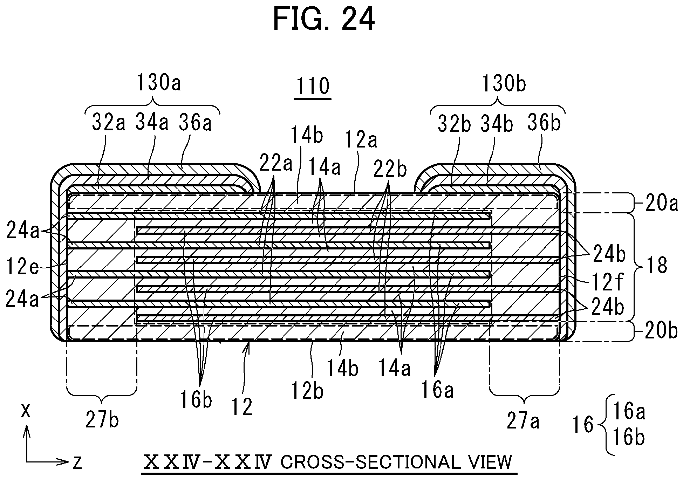

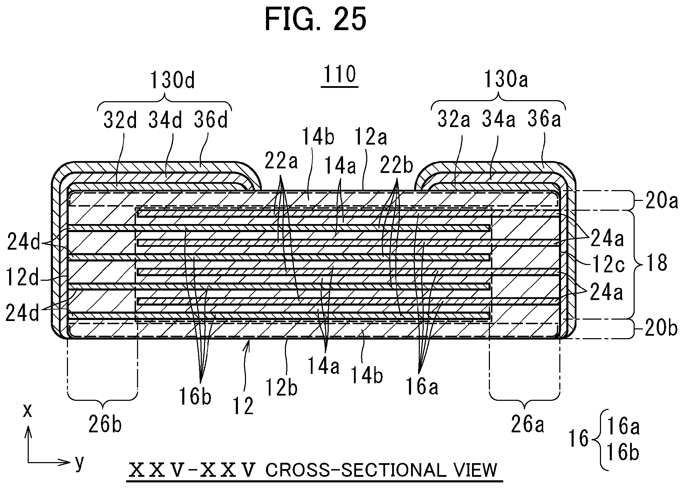

Fig. 15 is an external perspective view from one side illustrating an example of a multilayer ceramic capacitor according to the second embodiment of the present invention. Fig. 16 is an external perspective view from the other side illustrating an example of the multilayer ceramic capacitor according to the second embodiment of the present invention. Fig. 17 is a plan view illustrating an example of the multilayer ceramic capacitor according to the second embodiment of the present invention. Fig. 18 is a back view illustrating an example of the multilayer ceramic capacitor according to the second embodiment of the present invention. Fig. 19 is a front view illustrating an example of the multilayer ceramic capacitor according to the second embodiment of the present invention. Fig. 20 is a left side view illustrating an example of the multilayer ceramic capacitor according to the second embodiment of the present invention. Fig. 21 is a right side view illustrating an example of the multilayer ceramic capacitor according to the second embodiment of the present invention. Fig. 22 is a schematic sectional view taken along line XXII-XXII in Fig. 15. Fig. 23 is a schematic sectional view taken along line XX-XX in Fig. 15. Fig. 24 is a schematic sectional view taken along line XIV-XIV in Fig. 15. Fig. 25 is a schematic sectional view taken along line XXV-XXV in Fig. 15. Note that the same or corresponding configurations as those in Figs. 1 to 11 will be denoted by the same reference numerals, and detailed description thereof will be omitted.

The multilayer ceramic capacitor 110 includes a multilayer body 12 and a plurality of outer electrodes 130.

### (Multilayer Body)

In the multilayer ceramic capacitor 110 according to the second embodiment, the multilayer body 12 has the same configuration as that of the multilayer body 12 according to the first embodiment of the present invention illustrated in Fig. 1.

### (Inner Electrode)

A first inner electrode 16a is extended to a third surface 12c and a fifth surface 12e of the multilayer body 12 by a first extended electrode portion 24a, and is extended to a fourth surface 12d and a sixth surface 12f of the multilayer body 12 by a third extended electrode portion 24c.

A second inner electrode 16b is extended to the third surface 12c and the sixth surface 12f of the multilayer body 12 by a second extended electrode portion 24b, and is extended to the fourth surface 12d and the fifth surface 12e of the multilayer body 12 by a fourth extended electrode portion 24d.

### (Outer Electrode)

As illustrated in Figs. 15 to 25, the outer electrode 130 is disposed on the multilayer body 12.

The outer electrode 130 includes a plurality of outer electrodes 130 connected to the first inner electrode 16a and the second inner electrode 16b. The outer electrode 130 includes a first outer electrode 130a, a second outer electrode 130b, a third outer electrode 130c, and a fourth outer electrode 130d.

The first outer electrode 130a is disposed on the third surface 12c and the fifth surface 12e so as to cover the first extended electrode portion 24a of the first inner electrode 16a, and also to cover a part of the first surface 12a. The first outer electrode 130a is electrically connected to the first extended electrode portion 24a of the first inner electrode 16a.

The second outer electrode 130b is disposed on the third surface 12c and the sixth surface 12f so as to cover the second extended electrode portion 24b of the second inner electrode 16b, and also to cover a part of the first surface 12a. The second outer electrode 130b is electrically connected to the second extended electrode portion 24b of the second inner electrode 16b.

The third outer electrode 130c is disposed on the fourth surface 12d and the sixth surface 12f so as to cover the third extended electrode portion 24c of the first inner electrode 16a, and also to cover a part of the first surface 12a. The third outer electrode 130c is electrically connected to the third extended electrode portion 24c of the first inner electrode 16a.

The fourth outer electrode 130d is disposed on the fourth surface 12d and the fifth surface 12e so as to cover the fourth extended electrode portion 24d of the second inner electrode 16b, and also to cover a part of the first surface 12a. The fourth outer electrode 130d is electrically connected to the fourth extended electrode portion 24d of the second inner electrode 16b.

The first outer electrode 130a has, on the first surface 12a, a side 30₁₂ facing the second outer electrode 130b and a side 30₁₄ facing the fourth outer electrode 130d.

The second outer electrode 130b has, on the first surface 12a, a side 30₂₁ facing the first outer electrode 130a and a side 30₂₃ facing the third outer electrode 130c.

The third outer electrode 130c has, on the first surface 12a, a side 30₃₂ facing the second outer electrode 130b and a side 30₃₄ facing the fourth outer electrode 130d.

The fourth outer electrode 130d has, on the first surface 12a, a side 30₄₁ facing the first outer electrode 130a and a side 30₄₃ facing the third outer electrode 130c.

The side 30₁₂, the side 30₂₁, the side 30₃₄, and the side 30₄₃ are all inclined in the same direction with respect to the first direction y. The side 30₁₄, the side 30₄₁, the side 30₂₃, and the side 30₃₂ are all inclined in the same direction with respect to the second direction z.

As a result, an end portion P₁₂ of the side 30₁₂ on the third surface 12c side is located at the inner side portion (closer to the center) in the second direction z than an end portion Pₐ₁ of the first inner electrode 16a that is exposed on the third surface 12c. Likewise, an end portion P₃₄ of the side 30₃₄ on the fourth surface 12d side is located at the inner side portion (closer to the center) in the second direction z than an end portion P_{c1} of the first inner electrode 16a that is exposed on the fourth surface 12d. On the other hand, an end portion P₂₃ of the side 30₂₃ on the sixth surface 12f side is located at the inner side portion (closer to the center) in the first direction y than an end portion P_{b1} of the second inner electrode 16b that is exposed on the sixth surface 12f. Likewise, an end portion P₄₁ of the side 30₄₁ on the fifth surface 12e side is located at the inner side portion (closer to the center) in the first direction y than an end portion P_{d1} of the second inner electrode 16b that is exposed on the fifth surface 12e.

As a result, the self-alignment properties of the multilayer ceramic capacitor 110 when mounted by soldering in the first direction y and the second direction z can further improve the mountability of the capacitor.

Furthermore, an end portion P₁₄ of the side 30₁₄ on the fifth surface 12e side is located at the outer side portion in the first direction y than an end portion Pₐ₂ of the first inner electrode 16a that is exposed on the fifth surface 12e. Likewise, an end portion P₃₂ of the side 30₃₂ on the sixth surface 12f side is located at the outer side portion in the first direction y than an end portion P_{c2} of the first inner electrode 16a that is exposed on the sixth surface 12f. On the other hand, an end portion P₂₁ of the side 30₂₁ on the third surface 12c side is located at the outer side portion in the second direction z than an end portion P_{b2} of the second inner electrode 16b that is exposed on the third surface 12c. Likewise, an end portion P₄₃ of the side 30₄₃ on the fourth surface 12d side is located at the outer side portion in the second direction z than an end portion P_{d2} of the second inner electrode 16b that is exposed on the fourth surface 12d.

However, the comparison is not limited to the above, and comparison may also be made with the end portions of the outer electrodes 130 disposed on the third surface 12c to the sixth surface 12f. Specifically, the end portion P₁₄ of the side 30₁₄ on the fifth surface 12e side is located at the outer side portion in the first direction y than the end portion of the first outer electrode 130a in the first direction y when viewed from the fifth surface 12e. Likewise, the end portion P₃₂ of the side 30₃₂ on the sixth surface 12f side is located at the outer side portion in the first direction y than the end portion of the third outer electrode 130c in the first direction y when viewed from the sixth surface 12f. On the other hand, the end portion P₂₁ of the side 30₂₁ on the third surface 12c side is located at the outer side portion in the second direction z than the end portion of the second outer electrode 130b in the second direction z when viewed from the third surface 12c. Likewise, the end portion P₄₃ of the side 30₄₃ on the fourth surface 12d side is located at the outer side portion in the second direction z than the end portion of the fourth outer electrode 130d in the second direction z when viewed from the fourth surface 12d.

Therefore, with the above configuration, the self-alignment properties of the multilayer ceramic capacitor 10 when mounted by soldering in the first direction y and the second direction z can further improve the mountability of the capacitor.

It is preferable that the sides 30₁₂ and 30₄₃ have inclination angles θ₁ and θ₂ of 3° or more and 15° or less with respect to the first direction y and are inclined in the same direction. It is also preferable that the sides 30₁₄ and 30₂₃ have inclination angles θ₃ and θ₄ of 3° or more and 15° or less with respect to the second direction z and are inclined in the same direction.

As a result, the self-alignment properties of the multilayer ceramic capacitor 10 when mounted by soldering can further improve the mountability of the capacitor.

The end portion P₂₁ of the side 30₂₁ on the third surface 12c side is located at the outer side portion in the second direction z, with respect to the length of the second outer electrode 130b disposed on the third surface 12c, than the end portion at the inner side portion in the second direction z of the second outer electrode 130b disposed on the third surface 12c. Here, WE1 is the distance in the second direction z of the second outer electrode 130b when viewed from the lamination direction x. WE2 is the distance in the second direction z between the end portion P₂₁ of the side 30₂₁ on the third surface 12c side and the outermost end in the second direction z of the second outer electrode 130b. In this case, the ratio of WE2 to WE1 is preferably 54% or more and 98% or less.

The above configuration is also the same for P₄₃ of the side 30₄₃ on the fourth surface 12d side.

The end portion P₁₄ of the side 30₁₄ on the fifth surface 12e side is located at the outer side portion in the first direction y, with respect to the length of the first outer electrode 130a disposed on the fifth surface 12e, than the end portion at the inner side portion in the first direction y of the first outer electrode 130a disposed on the fifth surface 12e. Here, LE1 is the distance in the first direction y of the first outer electrode 130a when viewed from the fifth surface 12e side. LE2 is the distance in the first direction y between the end portion P₁₄ of the side 30₁₄ on the fifth surface 12e side and the outermost end in the first direction y of the first outer electrode 130a. In this case, the ratio of LE2 to LE1 is preferably 54% or more and 98% or less.

The above configuration is also the same for P₃₂ of the side 30₃₂ on the sixth surface 12f side.

The above configuration allows the multilayer ceramic capacitor 10 to be stably attracted and held in the case of mounting the multilayer ceramic capacitor 10 using a mount machine or the like.

It is preferable that the absolute value of the difference between a distance w₁ in the second direction z between the first outer electrode 130a and the second outer electrode 130b and a distance w₂ in the second direction z between the third outer electrode 130c and the fourth outer electrode 130d is 5 µm or less.

It is preferable that the absolute value of the difference between a distance l₁ in the first direction y between the first outer electrode 130a and the fourth outer electrode 130d and a distance l₂ in the first direction y between the second outer electrode 130b and the third outer electrode 130c is 5 µm or less.

It is preferable that the absolute value of the difference between the distance w₁ in the second direction z between the first outer electrode 130a and the second outer electrode 130b and the distance l₁ in the first direction y between the first outer electrode 130a and the fourth outer electrode 130d is 5 µm or less.

The sides 30₁₄, 30₂₃, 30₄₁, and 30₃₂ are preferably inclined in the second direction z so as to be orthogonal to the side 30₁₂. This can not only improve the self-alignment properties of the third surface 12c and the fourth surface 12d, but also improve the self-alignment properties of the fifth surface 12e and the sixth surface 12f.

The multilayer ceramic capacitor 110 according to the second embodiment illustrated in Fig. 15 has the same effect as that of the multilayer ceramic capacitor 10 described above, and also has the following effect.

According to the multilayer ceramic capacitor 110, the first outer electrode 130a and the third outer electrode 130c disposed on the first surface are disposed so as to extend toward the center in the second direction, and the second outer electrode 130b and the fourth outer electrode 130d are disposed so as to extend toward the center in the first direction y. This makes it possible to further improve the self-alignment properties during mounting of the multilayer ceramic capacitor.

The multilayer ceramic capacitor 110 according to the second embodiment of the present invention may also be combined with all or part of the above modification.

### 2. Method for Manufacturing Multilayer Ceramic Capacitor

A method for manufacturing a multilayer ceramic capacitor according to the second embodiment will be described below.

First, a dielectric sheet and a conductive paste for inner electrodes are prepared. The dielectric sheet and the conductive paste for inner electrodes contain a binder and a solvent. Known binders and solvents can be used.

Next, predetermined patterns are printed on the dielectric sheet using the conductive paste for inner electrodes by inkjet printing, screen printing, gravure printing, or the like, for example. A dielectric sheet having a first inner electrode pattern formed thereon and a dielectric sheet having a second inner electrode pattern formed thereon are thus prepared. Thereafter, the sheet having the first inner electrode pattern printed thereon and the sheet having the second inner electrode pattern printed thereon are laminated to form a portion to serve as an inner layer portion 18.

Note that, when the patterns are printed using each conductive paste, the pattern using the conductive paste for inner electrodes is printed first.

A predetermined number of dielectric sheets having no inner electrode patterns printed thereon are then laminated to form a portion to serve as a first outer layer portion 20a on the first surface 12a side. Thereafter, the portion to serve as the inner layer portion 18 prepared above is laminated, and the predetermined number of dielectric sheets having no inner electrode patterns printed thereon are laminated on the portion to serve as the inner layer portion 18 to form a portion to serve as a second outer layer portion 20b on the second surface 12b side. A multilayer sheet is thus prepared.

Next, the multilayer sheet is pressed in the lamination direction by means of an isostatic press or the like to produce a multilayer block.

Then, the multilayer block is cut to a predetermined size, thereby cutting out a multilayer chip. In this event, the corners and ridges of the multilayer chip may be rounded by barrel polishing or the like.

Next, the multilayer chip is fired to produce a multilayer body 12. The firing temperature depends on the ceramic and inner electrode materials, but is preferably 900 °C or higher and 1400 °C or lower.

Thereafter, an outer electrode 130 is formed on the multilayer body 12.

Specifically, the multilayer body 12 thus obtained is placed on a work table, and a predetermined mask is used to form a thin film layer 32 on the first surface 12a by sputtering.

Then, an underlying plating layer 34 is formed on the thin film layer 32 and the surface of the multilayer body 12, and a surface plating layer 36 is formed so as to cover the underlying plating layer 34. More specifically, a Cu plating layer is formed as the underlying plating layer 34 on the thin film layer 32. Thereafter, a Ni plating layer and a Sn plating layer are formed as the surface plating layer 36 on the surface of the underlying plating layer 34. Either electrolytic plating or electroless plating may be used for the plating process. However, electroless plating requires pretreatment with a catalyst or the like to improve the plating deposition speed, resulting in a disadvantage of complicating the process. Therefore, it is usually preferable to employ electrolytic plating.

The multilayer ceramic capacitor 110 according to the second embodiment illustrated in Fig. 15 can thus be manufactured.

The method for manufacturing a multilayer ceramic capacitor according to this embodiment makes it possible to reduce the thickness of T dimension in the lamination direction x of the outer electrode 130 formed on the first surface 12a. This makes it possible to provide a multilayer ceramic capacitor with a reduced height without impairing mountability during mounting.

### C. Experimental Examples

### 1. Experimental Example 1

Next, in order to confirm the effect of the multilayer ceramic capacitor according to the present invention described above, an evaluation was conducted on the alignment properties during mounting on a mounting board.

### (1) Specifications of Multilayer Ceramic Capacitor Manufactured as Sample of Experimental Example 1

As samples of Examples 1 to 5, multilayer ceramic capacitors were manufactured using the manufacturing method according to the above embodiments.
Structure of multilayer ceramic capacitor: Multilayer ceramic capacitor illustrated in Fig. 15
Dimension (L) of multilayer ceramic capacitor: 480 µm
Dimension (W) of multilayer ceramic capacitor: 480 µm
Dimension (T) of multilayer ceramic capacitor: 60 µm
Ceramic material: BaTiO₃
Material of inner electrode: Ni
Structure of outer electrode
Structure of outer electrode on first surface: Sputtering film made of Ni, Cr, and Cu, Ni plating, Sn plating

The side 30₁₂ of the first outer electrode, the side 30₂₁ of the second outer electrode, the side 30₃₄ of the third outer electrode, and the side 30₄₃ of the fourth outer electrode are substantially parallel to each other.

The side 30₁₄ of the first outer electrode, the side 30₂₃ of the second outer electrode, the side 30₃₂ of the third outer electrode, and the side 30₄₁ of the fourth outer electrode are substantially parallel to each other.

### (2) Evaluation Method

A mounting experiment was conducted by changing the angle of the side 30₁₂ of the multilayer ceramic capacitor of each sample having the above configuration relative to the first direction y and the angle of the side 30₁₄ relative to the second direction z as shown in Table 1. In the mounting experiment, if a sample of the multilayer ceramic capacitor was rotated by 15° or more when mounted on the mounting board by soldering, the sample was counted as a defect. One hundred samples were prepared for respective Examples.

### (3) Results

Table 1 shows the evaluation results.

Table 1 shows the evaluation results of the alignment properties when each sample of the multilayer ceramic capacitor was mounted on the mounting board with the change in the angle of the side 30₁₂ relative to the first direction y and the change in the angle of the side 30₁₄ relative to the second direction z of each sample of the multilayer ceramic capacitor.

**[Table 1]**

| | Example 1 | Example 2 | Example 3 | Example 4 | Example 5 |
|---|---|---|---|---|---|
| Angle of Side 30₁₂ Relative to First Direction (°) | 2 | 3 | 9 | 15 | 17 |
| Angle of Side 30₁₄ Relative to Second Direction (°) | 2 | 3 | 8 | 15 | 17 |
| Evaluation of Alignment Properties (Number of Samples) | 2/100 | 0/100 | 0/100 | 0/100 | 5/100 |

According to Table 1, in Examples 1 to 5, when the angle of the side 30₁₂ is 2° or more and 17°or less, the number of samples of the multilayer ceramic capacitor that rotated by 15° or more when mounted on the mounting board is 5 or less, which is a relatively good result.

Furthermore, in Examples 2 to 4, when the angle of the side 30₁₂ is 3° or more and 15° or less, the number of samples of the multilayer ceramic capacitor that rotated by 15° or more when mounted on the mounting board is 0, which is an even better result.

### 2. Experimental Example 2

As samples of Comparative Example and Examples 6 to 9, multilayer ceramic capacitors were manufactured using the manufacturing method according to the above embodiments.
Structure of multilayer ceramic capacitor: Multilayer ceramic capacitor illustrated in Fig. 15
Dimension (L) of multilayer ceramic capacitor: 480 µm
Dimension (W) of multilayer ceramic capacitor: 480 µm
Dimension (T) of multilayer ceramic capacitor: 60 µm
Ceramic material: BaTiO₃
Material of inner electrode: Ni
Structure of outer electrode
Structure of outer electrode on first surface: Sputtering film made of Ni, Cr, and Cu, Ni plating, Sn plating

The side 30₁₂ of the first outer electrode, the side 30₂₁ of the second outer electrode, the side 30₃₄ of the third outer electrode, and the side 30₄₃ of the fourth outer electrode are substantially parallel to each other.

The side 30₁₄ of the first outer electrode, the side 30₂₃ of the second outer electrode, the side 30₃₂ of the third outer electrode, and the side 30₄₁ of the fourth outer electrode are substantially parallel to each other.

### (2) Evaluation Method

A mount test and an appearance inspection after reflow mounting were conducted by changing the ratio of LE2 to LE1 as shown in Table 2, where LE1 is the distance in the first direction y of the first outer electrode when viewed from the fifth surface side of each sample of the multilayer ceramic capacitor having the above configuration, and LE2 is the distance in the first direction y between the end portion P₁₄ of the side 30₁₄ on the fifth surface side and the outermost end in the first direction y of the first outer electrode.

In the mount test, reflow mounting of each sample of the multilayer ceramic capacitor was performed using a mounter by applying a solder paste onto a glass epoxy board. In this event, the number of occurrences of "poor attraction" and "recognition failure" was counted when each sample of the multilayer ceramic capacitor was taken out from a feeder of a chip mounter. One hundred samples were prepared for respective Examples and Comparative Example.

In the appearance inspection, when each sample of the multilayer ceramic capacitor was viewed in the lamination direction with an image sensor, the sample with an outer electrode that was not recognized as the outer electrode was marked with "×".

### (3) Results

Table 2 shows the evaluation results.

Table 2 shows the evaluation results of the mount test and appearance inspection of each sample of the multilayer ceramic capacitor conducted by changing the ratio of LE2 to LE1 as shown in Table 2, where LE1 is the distance in the first direction y of the first outer electrode and LE2 is the distance in the first direction y between the end portion P₁₄ of the side 30₁₄ on the fifth surface side and the outermost end in the first direction y of the first outer electrode, when viewed from the lamination direction x of each sample of the multilayer ceramic capacitor.

**[Table 2]**

| | Example 6 | Example 7 | Example 8 | Example 9 | Comparative Example |
|---|---|---|---|---|---|
| LE2/LE1 (%) | 98 | 74 | 66 | 54 | 48 |
| Mount Test (Number of Samples) | 0/100 | 2/100 | 2/100 | 5/100 | - |
| Evaluation of Appearance Inspection | ○ | ○ | ○ | ○ | × |

According to Table 2, in Examples 6 to 9, when the ratio of LE2 to LE1 is 54% or more and 98% or less, the mount test showed a relatively good result that the number of samples of the multilayer ceramic capacitor with "poor attraction" or "recognition failure" was 5 or less.

Furthermore, in Examples 6 to 9, the appearance inspection showed a good result for every sample when the ratio of LE2 to LE1 was 54% or more and 98% or less.

In Comparative Example, on the other hand, since the ratio of LE2 to LE1 was as low as 48%, the mount test resulted in attraction failure. The appearance inspection also resulted in failure where an outer electrode was not recognized as the outer electrode when viewed in the lamination direction with the image sensor.

Note that, as described above, the embodiments of the present invention have been disclosed in the above description, but the present invention is not limited thereto.

For example, the outer electrode 30 in the first embodiment and the outer electrode 130 in the second embodiment are each disposed on the first surface 12a, but the present invention is not limited thereto, and the outer electrodes may be disposed on both the first surface 12a and the second surface 12b.

Various changes can be made to the embodiments described above in terms of mechanism, shape, material, quantity, position, arrangement, or the like without departing from the scope of the technical idea and purpose of the present invention, and these are included in the present invention.

### Reference Signs List

10, 10A, 110 MULTILAYER CERAMIC CAPACITOR
12 MULTILAYER BODY
12a, 112a FIRST SURFACE
12b, 112b SECOND SURFACE
12c, 112c THIRD SURFACE
12d, 112d FOURTH SURFACE
12e, 112e FIFTH SURFACE
12f, 112f SIXTH SURFACE
14, 114 DIELECTRIC LAYER
14a, 114a INNER DIELECTRIC LAYER
14b, 114b OUTER DIELECTRIC LAYER
16, 116 INNER ELECTRODE
16a, 116a FIRST INNER ELECTRODE
16b, 116b SECOND INNER ELECTRODE
18, 118 INNER LAYER PORTION
20a, 120a FIRST OUTER LAYER PORTION
20b, 120b SECOND OUTER LAYER PORTION
22a, 122a FIRST COUNTER ELECTRODE PORTION
22b, 122b SECOND COUNTER ELECTRODE PORTION
24a, 124a FIRST EXTENDED ELECTRODE PORTION
24b, 124b SECOND EXTENDED ELECTRODE PORTION
24c, 124c THIRD EXTENDED ELECTRODE PORTION
24d, 124d FOURTH EXTENDED ELECTRODE PORTION
26a, 26b, 126a, 126b SIDE PORTION (W GAP) OF MULTILAYER BODY
27a, 27b, 127a, 127b END PORTION (L GAP) OF MULTILAYER BODY
30, 130 OUTER ELECTRODE
30a, 130a FIRST OUTER ELECTRODE
30b, 130b SECOND OUTER ELECTRODE
30c, 130c THIRD OUTER ELECTRODE
30d, 130d FOURTH OUTER ELECTRODE
32, 132 THIN FILM LAYER
32a, 132a FIRST THIN FILM LAYER
32b, 132b SECOND THIN FILM LAYER
32c, 132c THIRD THIN FILM LAYER
32d, 132d FOURTH THIN FILM LAYER
34, 134 UNDERLYING PLATING LAYER
34a, 134a FIRST UNDERLYING PLATING LAYER
34b, 134b SECOND UNDERLYING PLATING LAYER
34c, 134c THIRD UNDERLYING PLATING LAYER
34d, 134d FOURTH UNDERLYING PLATING LAYER
36, 136 SURFACE PLATING LAYER
36a, 136a FIRST SURFACE PLATING LAYER
36b, 136b SECOND SURFACE PLATING LAYER
36c, 136c THIRD SURFACE PLATING LAYER
36d, 136d FOURTH SURFACE PLATING LAYER
33 DIRECT PLATING LAYER
33a FIRST DIRECT PLATING LAYER
33b SECOND DIRECT PLATING LAYER
x LAMINATION DIRECTION
y FIRST DIRECTION
z SECOND DIRECTION
L DIMENSION OF MULTILAYER CERAMIC CAPACITOR IN FIRST DIRECTION
W DIMENSION OF MULTILAYER CERAMIC CAPACITOR IN SECOND DIRECTION
T DIMENSION OF MULTILAYER CERAMIC CAPACITOR IN LAMINATION DIRECTION

## Claims

1. A multilayer ceramic capacitor comprising:
a multilayer body having a first surface and a second surface that face each other in a lamination direction, a third surface and a fourth surface that face each other in a first direction orthogonal to the lamination direction, and a fifth surface and a sixth surface that face each other in a second direction orthogonal to the lamination direction and the first direction;
a first outer electrode disposed on the third surface, the fifth surface, and the first surface;
a second outer electrode disposed on the third surface, the sixth surface, and the first surface;
a third outer electrode disposed on the fourth surface, the sixth surface, and the first surface; and
a fourth outer electrode disposed on the fourth surface, the fifth surface, and the first surface, wherein,
on the first surface,
the first outer electrode includes
a side A of the first outer electrode facing the fourth outer electrode and
a side B of the first outer electrode facing the second outer electrode,
the second outer electrode includes
a side C of the second outer electrode facing the first outer electrode and
a side D of the second outer electrode facing the third outer electrode,
the third outer electrode includes
a side E of the third outer electrode facing the second outer electrode and
a side F of the third outer electrode facing the fourth outer electrode, and
the fourth outer electrode includes
a side G of the fourth outer electrode facing the third outer electrode and
a side H of the fourth outer electrode facing the first outer electrode,
the side B, the side C, the side F, and the side G are inclined in the same direction with respect to the first direction, and
0.85 ≤ L/W ≤ 1.0 is satisfied, where L is a dimension in the first direction and W is a dimension in the second direction.

2. The multilayer ceramic capacitor according to claim 1, wherein the side A, the side D, the side E, and the side H are inclined in the same direction with respect to the second direction.

3. The multilayer ceramic capacitor according to claim 1 or 2, wherein the side B and the side G are inclined at 3° or more and 15° or less with respect to the first direction.

4. The multilayer ceramic capacitor according to any one of claims 1 to 3, wherein the side A and the side D are inclined at 3° or more and 15° or less with respect to the second direction.

5. The multilayer ceramic capacitor according to any one of claims 1 to 4, wherein
the multilayer body includes
a first inner electrode exposed on the third surface and the fifth surface,
a second inner electrode exposed on the third surface and the sixth surface,
a first inner electrode exposed on the fourth surface and the sixth surface, and
a second inner electrode exposed on the fourth surface and the fifth surface,
an end portion of the side B of the first outer electrode on the third surface side is located at an inner side portion in the second direction than an end portion of the first inner electrode exposed on the third surface, and
an end portion of the side F of the third outer electrode on the fourth surface side is located at an inner side portion in the second direction than an end portion of the first inner electrode exposed on the fourth surface.

6. The multilayer ceramic capacitor according to any one of claims 1 to 5, wherein
an end portion of the side D of the second outer electrode on the sixth surface side is located at an inner side portion in the first direction than an end portion of the second inner electrode exposed on the sixth surface, and
an end portion of the side H of the fourth outer electrode on the fifth surface side is located at an inner side portion in the first direction than an end portion of the second inner electrode exposed on the fifth surface.

7. The multilayer ceramic capacitor according to any one of claims 1 to 6, wherein
an end portion of the side A on the fifth surface side is located at an outer side portion in the first direction than an end portion of the first inner electrode exposed on the fifth surface, and
an end portion of the side E on the sixth surface side is located at an outer side portion in the first direction than an end portion of the first inner electrode exposed on the sixth surface.

8. The multilayer ceramic capacitor according to any one of claims 1 to 7, wherein
an end portion of the side C on the third surface side is located at an outer side portion in the second direction than an end portion of the second inner electrode exposed on the third surface, and
an end portion of the side G on the fourth surface side is located at an outer side portion in the second direction than an end portion of the second inner electrode exposed on the fourth surface.

9. The multilayer ceramic capacitor according to any one of claims 1 to 8, wherein
an end portion of the side A on the fifth surface side is located at an outer side portion in the first direction, with respect to a length of the first outer electrode disposed on the fifth surface, than an end portion at an inner side portion in the first direction of the first outer electrode disposed on the fifth surface, and
a ratio of LE2 to LE1 is 54% or more and 98% or less, where LE1 is a distance in the first direction of the first outer electrode when viewed from the fifth surface side and LE2 is a distance in the first direction between the end portion of the side A on the fifth surface side and an outermost end of the first outer electrode in the first direction.

10. The multilayer ceramic capacitor according to any one of claims 1 to 9, wherein
an end portion of the side C on the third surface side is located at an outer side portion in the second direction, with respect to a length of the second outer electrode disposed on the third surface, than an end portion at an inner side portion in the second direction of the second outer electrode disposed on the third surface, and
a ratio of WE2 to WE1 is 54% or more and 98% or less, where WE1 is a distance in the second direction of the second outer electrode when viewed from the third surface side and WE2 is a distance in the second direction between the end portion of the side C on the third surface side and an outermost end of the second outer electrode in the second direction.

11. The multilayer ceramic capacitor according to any one of claims 1 to 10, wherein an absolute value of a difference between a distance in the second direction between the first outer electrode and the second outer electrode and a distance in the second direction between the third outer electrode and the fourth outer electrode is 5 µm or less.

12. The multilayer ceramic capacitor according to any one of claims 1 to 11, wherein an absolute value of a difference between a distance in the first direction between the first outer electrode and the fourth outer electrode and a distance in the first direction between the second outer electrode and the third outer electrode is 5 µm or less.

13. The multilayer ceramic capacitor according to any one of claims 1 to 12, wherein an absolute value of a difference between a distance in the second direction between the first outer electrode and the second outer electrode and a distance in the first direction between the first outer electrode and the fourth outer electrode is 5 µm or less.
